(19) Europäisches Patentamt / European Patent Office / Office européen des brevets

(11) **EP 4 477 309 B1**

(12) **EUROPEAN PATENT SPECIFICATION**


(45) Date of publication and mention of the grant of the patent: **19.08.2026 Bulletin 2026/34**

(21) Application number: **23824030.3**

(22) Date of filing: **01.02.2023**

(51) International Patent Classification (IPC):
***B01J 19/00*** *(2006.01)* ***B01D 1/22*** *(2006.01)*
***B01D 1/26*** *(2006.01)* ***B01D 1/30*** *(2006.01)*
***B01D 3/06*** *(2006.01)*

(52) Cooperative Patent Classification (CPC):
**B01D 1/26; B01D 1/22; B01D 1/30; B01D 3/065**

(86) International application number:
**PCT/KR2023/001445**

(87) International publication number:
**WO 2023/243800 (21.12.2023 Gazette 2023/51)**


# (54) AMINO ACID PRODUCTION SYSTEM WITH RECONFIGURABLE MULTIPLE PIPES FOR COMPATIBLE PRODUCTION OF AMINO ACIDS AND METHOD FOR CONFIGURING SAME

AMINOSÄUREPRODUKTIONSSYSTEM MIT REKONFIGURIERBAREN MEHREREN ROHREN ZUR KOMPATIBLEN HERSTELLUNG VON AMINOSÄUREN UND VERFAHREN ZUR KONFIGURATION DAVON

SYSTÈME DE PRODUCTION D'ACIDES AMINÉS À TUYAUX MULTIPLES RECONFIGURABLES POUR LA PRODUCTION COMPATIBLE D'ACIDES AMINÉS ET SON PROCÉDÉ DE CONFIGURATION


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.06.2022 KR 20220072201**

(43) Date of publication of application:
**18.12.2024 Bulletin 2024/51**



(73) Proprietor: **CJ CheilJedang Corporation**
**Seoul 04560 (KR)**

(72) Inventors:
- **KIM, Jun-Woo**
  **Seoul 04560 (KR)**
- **PARK, Woohyung**
  **Seoul 04560 (KR)**
- **LEE, Kang Hoon**
  **Seoul 04560 (KR)**
- **HONG, Seok Bin**
  **Seoul 04560 (KR)**
- **PARK, Chanhun**
  **Seoul 04560 (KR)**
- **KIM, Miae**
  **Seoul 04560 (KR)**
- **KIM, Jinguk**
  **Seoul 04560 (KR)**

(74) Representative: **Meissner Bolte Partnerschaft mbB**
**Patentanwälte Rechtsanwälte**
**Postfach 86 06 24**
**81633 München (DE)**



(56) References cited:

**CN-A- 105 032 044**
**CN-A- 107 050 902**
**CN-B- 101 804 262**
**CN-U- 202 270 371**
**CN-U- 208 720 845**
**DE-A1- 2 334 481**
**KR-A- 20200 143 854**
**KR-B1- 101 975 720**
**US-A- 5 250 183**
**US-A1- 2006 157 338**
**US-B2- 10 350 548**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### [Technical Field]

The present invention relates to an amino acid production system and configuration method including a plurality of reconfigurable pipes for compatible production of amino acids.

### [Background Art]

Manufacturing systems are classified into dedicated manufacturing system (DMS), flexible manufacturing system (FMS), and reconfigurable manufacturing system (RMS) in terms of productivity and functionality. The DMS produces a single product and has a fixed device structure. The FMS produces multiple products and has a fixed device structure. The RMS produces multiple products and has an adjustable device structure.

As market uncertainty increases due to the increasing frequency of new products, changes in the production process of existing products, fluctuations in demand and supply of products, changes in safety and environmental policies, and evolution of technology, a value of functionality increases compared to productivity. Therefore, compatible production through the FMS may create greater value, compared to the DMS.

Here, application of the RMS that may change a structure of a device according to types of manufactured products may improve productivity and manufacturing costs, compared to the FMS, so value creation may further increase.

In particular, attempts to incorporate advanced solutions for the RMS have continued in the industry that aims for smart manufacturing under the trend of promoting the fourth industrial revolution worldwide.

Attempts to incorporate advanced solutions for the RMS have also been made in the chemical and bio industries.

According to the academic material (A. Adamo et al., On-Demand Continuous-Flow Production of Pharmaceuticals in a Compact, Reconfigurable System, Science, 352 (2016) 6281), it was reported that pharmaceutical substances, such as diphenhydramine, lidocaine, diazepam, and fluoxetine were prepared in a small laboratory using reconfigurable and on-demand continuous type of synthesis, membrane separation, crystallization, and formulation complex experimental apparatus.

In addition, according to academic materials (A.-C. Bedard et al., Reconfigurable system for automated optimization of diverse chemical reactions, Science, 361 (2018) 6408 and patent US11185839B2), it was reported that Buchwald-Hartwig amination reaction, Horner-Wadsworth-Emmons (HWE) olefination reaction, reductive amination reaction, Suzuki-Miyaura cross-coupling reaction, photoredox reaction were conducted on a small laboratory scale using plug-and-play, reconfigurable, and continuous chemical reaction device for pharmaceutical material synthesis.

In addition, according to academic data (L. Hohmann et al., Continuous Downstream Processing of Amino Acids in a Modular Miniplant, Chem. Eng. Technol. 41 (2018) 1152), it was reported that L-alanine was prepared in a modular mini-plant including a process liquid supply, evaporator, crystallization, and crystal separator on a small pilot scale.

In addition, according to US Patent No. 8,594,848 (published on March 20, 2008), a laboratory-scale device system capable of producing a variable chemical product including a glass material reactor, a glass material transport device, and a reconfigurable control device is mentioned.

However, the aforementioned conventional technologies are based on small-scale experiments or pilot facilities and have limitations in that they have not been scaled up to actual industrial devices. For example, in the case of an industrial evaporator for bulk chemical production, it is common to apply a multi-effect evaporator including a plurality of falling film evaporator due to economic feasibility.

However, the evaporator reported in the conventional modular mini plant has a small equipment size, so it cannot replicate such device characteristics and is operated only as a single evaporator, resulting in low efficiency.

DE 23 34 481 A1 discloses a device for distillation of sea water including heat exchangers, separation tanks, feeds for seawater and primary steam, discharges for brine and fresh water, and a connection to a vacuum system.

CN 101 804 262 B relates to a three-effect, seven-stroke falling film evaporator including a one-effect heating chamber, a two-effect heating chamber and a three-effect heating chamber for heating materials.

US 2006/157338 A1 teaches a method for economically supplying additional heat to a distillation process comprising a plurality of effects.

US 5,250,183 A discloses an apparatus for manufacturing ultra-pure water having an electric resistivity of at least 17MΩ cm.

CN 107 050 902 A teaches a multi-effect falling film evaporator energy-saving steam system, comprising a number of effective falling-film evaporator.

CN 202 270 371 U relates to an L-phenylalanine salt solution evaporation energy-saving device, comprising a raw material tank, a raw material pump, an evaporator and a separator.

The above information disclosed in this Background section is only for enhancement of understanding of the

background of the invention, and therefore it may contain information that does not form the prior art that is already known in this country to a person of ordinary skill in the art.

**[Disclosure]**

**[Technical Problem]**

The present invention provides a reconfigurable amino acid production system and configuring method capable of reconfiguration for compatible production of amino acid by selectively connecting a discharge pipe for discharging an amino acid concentrate to the outside to one of a plurality of evaporators according to the needs of an amino acid production process.

**[Technical Solution]**

The abovementioned technical problem is solved by a reconfigurable amino acid production system according to claim 1 and by a method of connecting a plurality of pipes in the reconfigurable amino acid production system according to claim 2.

The amino acid production system includes: a plurality of preheaters heating a process liquid in which amino acids are mixed and connected to each other through a plurality of pipes; and a plurality of evaporators evaporating the process liquid heated through the plurality of preheaters through heat exchange with a heat source and connected to each other through a plurality of pipes, wherein one of the plurality of vaporators discharges an amino acid concentrate from which water has been removed through evaporation to the outside through a discharge pipe, and the discharge pipe is selectively connected to one of the plurality of evaporators.

The plurality of evaporators includes at least three evaporators and are sequentially connected in series through a plurality of pipes.

When the discharge pipe is connected to the remaining evaporators other than a last evaporator among the plurality of evaporators, the evaporator to which the discharge pipe is connected is connected to a backward pipe into which the process liquid discharged from the last evaporator is introduced.

The discharge pipe may be connected to a first evaporator to finally discharge the amino acid concentrate, and a plurality of pipes connected to the plurality of evaporators include a plurality of forward process liquid pipes transferring the process liquid in a forward direction from a second evaporator to the last evaporator and a backward process liquid pipe transferring the process liquid in a backward direction from the last evaporator to the first evaporator.

The discharge pipe may be connected to the remaining evaporators except for a first evaporator and a last evaporator, among the plurality of evaporators, to finally discharge the amino acid concentrate, and the plurality of pipes connected to the plurality of evaporators includes a plurality of forward process liquid pipes transferring the process liquid in a forward direction from the first evaporator to evaporators located at the front of the last evaporator; and a backward process liquid pipe transferring the process liquid in a backward direction from the last evaporator to the evaporator connected to the discharge pipe.

The discharge pipe may be connected to the last evaporator to finally discharge the amino acid concentrate, and the plurality of pipes connected to the plurality of evaporators include a plurality of forward process liquid pipes transferring the process liquid from the first evaporator to an evaporator located at the front of the last evaporator.

The plurality of preheaters is sequentially connected in series through the plurality of pipes, and a preheated process liquid discharged from a first preheater located at the frontmost end may flow into the first evaporator located at the frontmost end.

The amino acid production system further includes: a plurality of circulation pumps respectively connected to the plurality of evaporators and sequentially discharging the process liquid discharged from the plurality of evaporators to the next evaporators through respective pipes.

The plurality of circulation pumps is further connected to a pipe circulating the process liquid to the connected evaporator.

The amino acid production system further includes: a plurality of separators connected to the plurality of evaporators and supplying a vapor discharged from the plurality of evaporators to the evaporator and the preheater at the rear, wherein an evaporator located at the frontmost end, among the plurality of evaporators, and a preheater located at the frontmost end, among the plurality of preheaters, is supplied with steam introduced from the outside.

The method of connecting a plurality of pipes in an amino acid production system including a plurality of multi-effect falling film type evaporator connected through a plurality of pipes, includes: sequentially connecting the evaporators in series through the plurality of tubes, and selectively connecting a discharge pipe discharging an amino acid concentrate from which water is removed through evaporation in the evaporators to one of the evaporators.

The method further includes: after the selectively connecting, when the discharge pipe is connected to an

evaporator other than a last evaporator, among the evaporators, connecting through process liquid pipes moving a process liquid mixed with amino acids in a forward direction from a first evaporator to the last evaporator; and connecting through the process liquid pipe moving the process liquid in a backward direction from the last evaporator to the evaporator connected to the discharge pipe.

The method further includes: connecting a plurality of condensers condensing steam discharged from the plurality of evaporators to individual evaporators and an evaporator located at the rear of the individual evaporators, wherein the process liquid discharged from the plurality of condensers may be transferred to each individual evaporator and the evaporator located at the rear of each individual evaporator through a circulation pipe.

The method further includes: connecting a plurality of preheaters heating the process liquid mixed with amino acids in series through a plurality of pipes, and connecting a preheater connected to a last position with respect to a preheater at a point to which the process liquid is introduced, to a first evaporator, among the evaporators, through a pipe, wherein the process liquid heated through the preheater connected to the last position may be transferred to the first evaporator.

## [Advantageous Effects]

According to the present invention, a discharge pipe discharging an amino acid concentrate to the outside in an amino acid production process in which the amount of production needs to be adjusted is selectively connected to one of a plurality of evaporators to be reconfigured, so that energy may be saved, compared to the conventional evaporator in which a discharge pipe is fixed.

In particular, by arranging a unit process with relatively low energy efficiency, such as an evaporative crystallization process, at the end of an evaporation process, an energy optimization effect of the reconfiguration of the discharge pipe of the multi-effect evaporator may be further strengthened.

## [Description of the Drawings]

FIG. 1 is a diagram showing a structure of an amino acid production system according to an exemplary embodiment.

FIG. 2 is an enlarged view of an evaporator in FIG. 1.

FIG. 3 is an enlarged view of a preheater in FIG. 1.

FIG. 4 is a diagram showing a structure of an amino acid production system according to another exemplary embodiment.

FIG. 5 is a diagram showing a structure of an amino acid production system according to another exemplary embodiment.

FIG. 6 is a diagram showing a structure of an amino acid production system according to another exemplary embodiment.

FIG. 7 is a diagram showing a structure of an amino acid production system according to another exemplary embodiment.

FIG. 8 is a graph showing concentration of a concentrate for each discharge pipe component according to experimental example and solubility.

FIG. 9 is a graph showing individual steam efficiency of a multi-effect evaporator according to experimental example.

FIG. 10 is a graph showing steam efficiency of the entire process including an evaporative crystallization process at the rear according to experimental example.

FIG. 11 is a graph showing concentration of a concentrate for each discharge pipe component according to another experimental example and solubility.

FIG. 12 is a graph showing individual steam efficiency of multi-effect evaporator according to another experimental example.

FIG. 13 is a graph showing steam efficiency of the entire process including an evaporative crystallization process at the rear according to another experimental example.

FIG. 14 is a graph showing concentration of a concentrate for each discharge pipe component according to another experimental example and solubility.

FIG. 15 is a graph showing individual steam efficiency of a multi-effect evaporator according to another experimental example.

FIG. 16 is a graph showing steam efficiency of the entire process including an evaporative crystallization process at the rear according to another experimental example.

FIG. 17 is a graph showing solubility of L-lysine, L-methionine, L-threonine, and L-valine in water according to experimental example.

**[Mode for Invention]**

In the following detailed description, only certain exemplary embodiments of the present invention have been shown and described, simply by way of illustration.

**In** the description, reference numerals and names are attached for convenience of description, and devices are not necessarily limited to reference numerals or names.

**In** the description, unless explicitly described to the contrary, the word "comprise", and variations, such as "comprises" or "comprising", will be understood to imply the inclusion of stated elements but not the exclusion of any other elements.

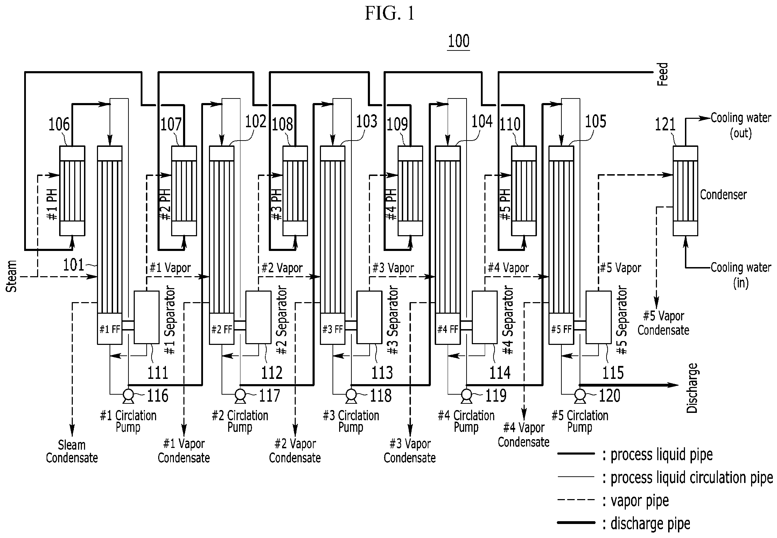

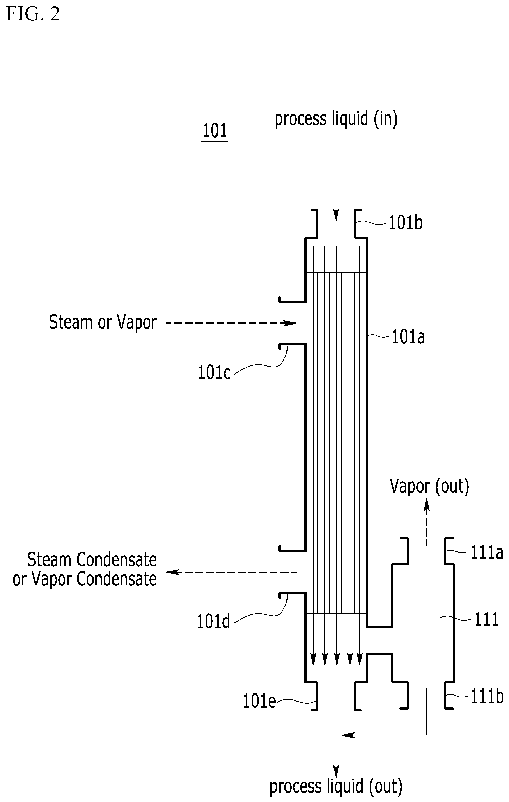

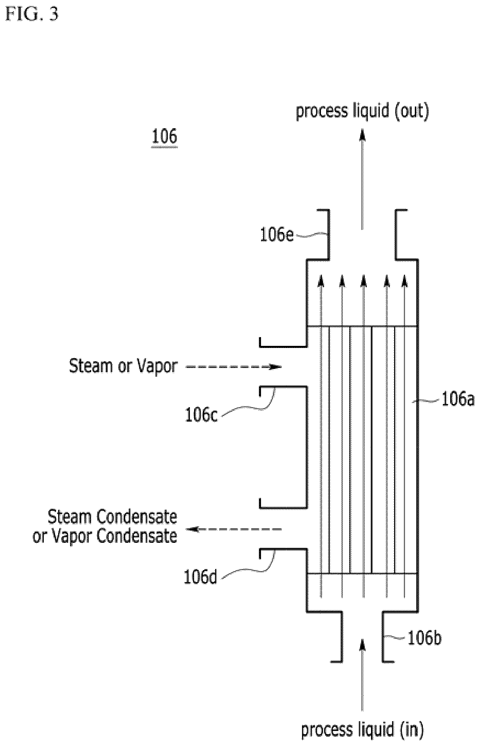

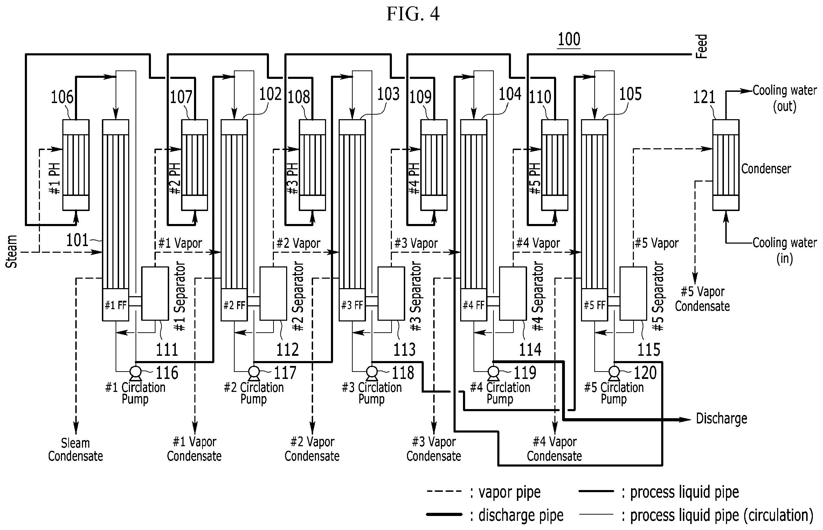

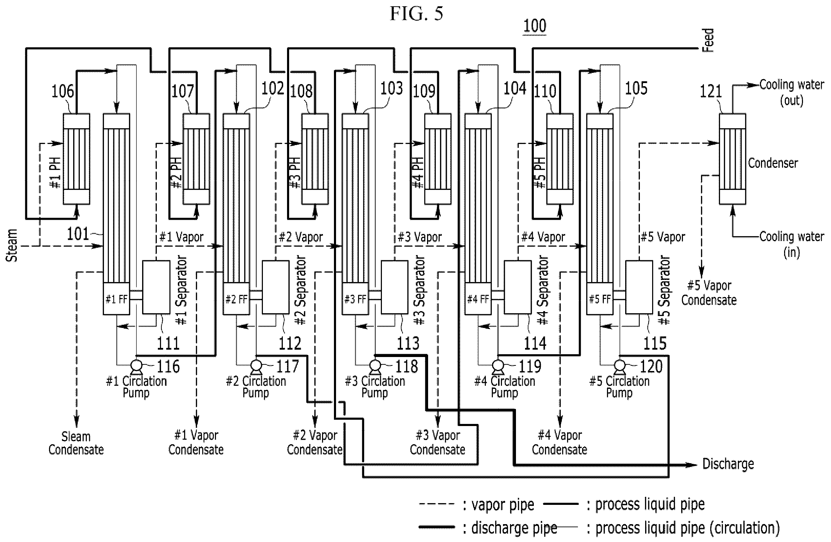

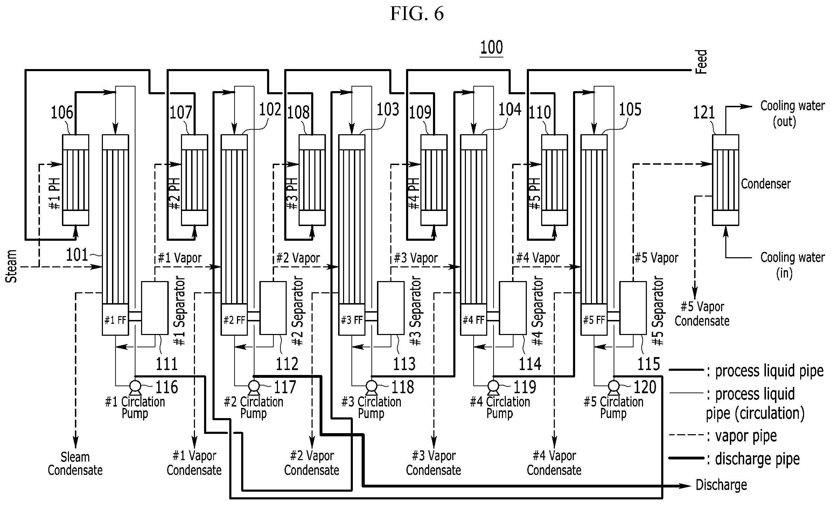

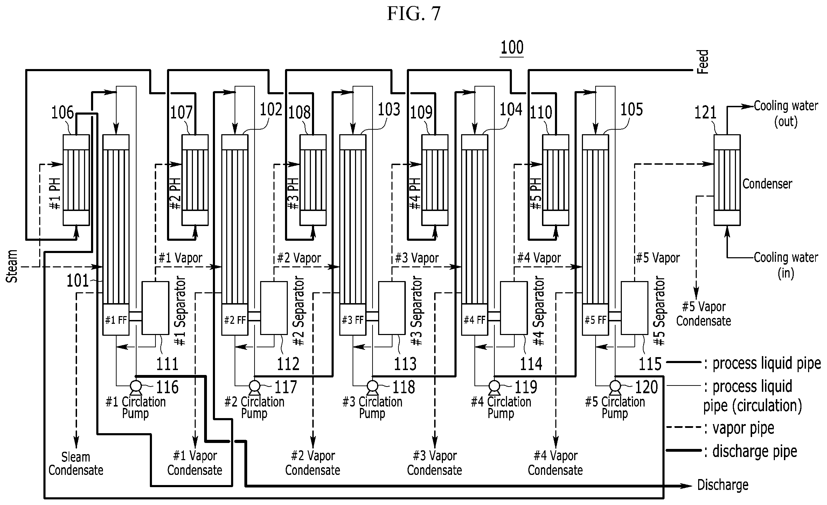

FIG. 1 is a diagram showing a structure of an amino acid production system according to an exemplary embodiment, FIG. 2 is an enlarged view of an evaporator in FIG. 1, FIG. 3 is an enlarged view of a preheater in FIG. 1, FIG. 4 is a diagram showing a structure of an amino acid production system according to another exemplary embodiment, FIG. 5 is a diagram showing a structure of an amino acid production system according to another exemplary embodiment, FIG. 6 is a diagram showing a structure of an amino acid production system according to another exemplary embodiment, and FIG. 7 is a diagram showing a structure of an amino acid production system according to another exemplary embodiment.

Referring to FIGS. 1 to 7, an amino acid production system 100 is configured using a multi-effect falling film (FF) evaporator (hereinafter collectively referred to as 'evaporator'). Here, a process liquid corresponds to an amino acid mixture solution including amino acids. According to an exemplary embodiment, the process liquid is an amino acid process liquid and may include at least one amino acid among L-lysine, L-methionine, L-threonine, L-valine, L-tryptophan, L-histidine, L-arginine, L-isoleucine, L-cysteine and L-glutamine.

According to an exemplary embodiment, the amino acid production system 100 forms a thin film with a supplied amino acid mixed solution, and discharges a concentrate including amino acids of a target concentration through a plurality of evaporation processes in a falling film method.

At this time, in the present specification, a liquid discharged through an intermediate evaporation process is described as a process liquid, and a liquid finally discharged through a discharge pipe is described as an amino acid concentrate.

The amino acid production system 100 includes a plurality of evaporators 101, 102, 103, 104, and 105, a plurality of pre-heaters (PH) 106, 107, 108, 109, and 110, a plurality of separators 111, 112, 113, 114, and 115, a plurality of circulation pumps 116, 117, 118, 119, and 120, and a condenser 121.

The amino acid production system 100 has a structure in which the discharge pipe may be changed to reconfigure the process liquid flow of the multi-effect falling film evaporator 101, 102, 103, 104, and 105.

In the exemplary embodiment of FIG. 1, the discharge pipe is connected to the last evaporator, that is, a fifth evaporator (#5 FF) 105. In the exemplary embodiment of FIG. 4, the discharge pipe is connected to a fourth evaporator (#4 FF) 104. In the exemplary embodiment of FIG. 5, the discharge pipe is connected to a third evaporator (#3 FF) 103. In the exemplary embodiment of FIG. 6, the discharge pipe is connected to a second evaporator (#2 FF) 102. In the exemplary embodiment of FIG. 7, the discharge pipe is connected to a first evaporator (#1 FF) 101.

At this time, the numbers of evaporators 101, 102, 103, 104, and 105 and the preheaters 106, 107, 108, 109, and 110 are implemented as five, but the numbers of the evaporators 101, 102, 103, 104, and 105 and the preheaters 106, 107, 108, 109, and 110 are not limited to five. However, if there are two evaporators, a flow of the process liquid is a forward flow when the discharge pipe is the second pipe, but the flow of the process liquid is backward flow when the discharge pipe is the first pipe, so the effect of the present invention cannot be exhibited. Therefore, it is required that the number of evaporators is at least three.

The evaporators 101, 102, 103, 104, and 105 evaporate the amino acid process liquid through falling film heat exchange to discharge an amino acid concentrate.

Referring to FIG. 2, a structure of the first evaporator (#1 FF, 101 in FIG. 1) is shown to be enlarged. The structure of the first evaporator 101 is equally applied also to the second evaporator (#2 FF) 102, the third evaporator (#3 FF) 103, the fourth evaporator (#4 FF) 104, and the fifth evaporator (#5 FF) 105.

The evaporator 101 includes a plurality of tubes 101a, a process liquid inlet 101b, a heat source inlet 101c, a condensate outlet 101d, and a process liquid outlet 101e.

The plurality of tubes 101a receive a process liquid from the outside through the process liquid inlet 101b. The plurality of tubes 101 a receive steam or vapor from the outside through the heat source inlet 101c. At this time, since the evaporator 101 is the first evaporator in FIG. 1, the evaporator 101 receives steam. In the case of the second evaporator 102, the third evaporator 103, the fourth evaporator 104, and the fifth evaporator 105 in FIG. 1, the plurality of tubes 101a receive vapor generated by evaporation of the process liquid through the heat source inlet 101c.

Condensation heat generated as steam or vapor supplied through the heat source inlet 101c is condensed evaporates the process liquid supplied through the plurality of tubes 101a. Steam condensate or vapor condensate is discharged to the outside through the condensate outlet 101d. Most of the process liquid that is not evaporated during the

evaporation process is discharged to the process liquid outlet 101e.

At this time, the evaporated vapor is mixed with a partial droplet-type process liquid and introduced into the separator 111 connected to the evaporator 101. The separator 111 discharges vapor to the outside through the vapor outlet 111a. The vapor-separated process liquid is discharged to the outside through the process liquid outlet 111b. The process liquid discharged through the process liquid outlet 111b is combined with the process liquid discharged through the process liquid outlet 101e of the evaporator 101 and introduced into the first circulation pump 116 of FIG. 1.

Here, the configuration of the first separator 111 is equally applied to the second separator 112, the third separator 113, the fourth separator 114, and the fifth separator 115. The configuration of the first circulation pump 116 is equally applied to the second circulation pump 117, the third circulation pump 118, the fourth circulation pump 119, and the fifth circulation pump 120.

The preheaters 106, 107, 108, 109, and 110 heat the process liquid using steam or vapor as a heat source.

Referring to FIG. 3, the structure of the first preheater (106 in FIG. 1) is shown to be enlarged. The structure of the first preheater 106 is equally applied to the second preheater 107, the third preheater 108, the fourth preheater 109, and the fifth preheater 110 in FIG. 1.

The preheater 106 may include a plurality of tubes 106a, a process liquid inlet 106b, a heat source inlet 106c, a condensate outlet 106d, and a process liquid outlet 106e.

As the process liquid flowing into the plurality of tubes 106a through the process liquid inlet 106b is liquefied through heat exchange using steam or vapor supplied through the heat source inlet 106c as a heat source, condensation heat is generated, so that a temperature of the process liquid increases. The process liquid having an increased temperature is discharged through the process liquid outlet 106e. Also, steam condensate or vapor condensate produced due to liquefaction is discharged through the condensate outlet 106d.

As described in FIG. 2, the separators 111, 112, 113, 114, and 115 are connected to the evaporators 101, 102, 103, 104, and 105, separate vapor from the process liquid produced in the evaporators 101, 102, 103, 104, and 105.

The circulation pumps 116, 117, 118, 119, and 120 circulate the process liquid discharged from the evaporators 101, 102, 103, 104, and 105 and the separators 111, 112, 113, 114, and 115 to the evaporators 101, 102, 103, 104, and 105 and simultaneously discharge the process liquid to other evaporators 102, 103, 104, and 105 at the rear. At this time, the circulation pumps 116, 117, 118, 119, and 120 may also serve as pipe pumps.

According to an exemplary embodiment, the amino acid production system 100 may be designed to satisfy five conditions as shown in Table 1 below.

(Table 1)

| | |
|---|---|
| condition 1 | Evaporators configured as N (N>2) stages<br>Here, N is a total number of evaporators, which is the same as the order of the last evaporator. |
| condition 2 | Reconfiguration is possible so that D, which indicates the order of an evaporator connected to a discharge pipe, is connected to an evaporator which is two or more and equal to or less than N in order. |
| condition 3 | ① Structure in which, when D=1, the process liquid flows in a forward direction from the second evaporator to an N-th evaporator, flows from the N-th evaporator to the first evaporator, and is finally discharged from the first evaporator<br>② Structure in which, when D>1 and D<N, the process liquid flows sequentially from the first evaporator to a (D-1)-th evaporator, flows from the (D-1)-th evaporator to a (D+1)-th evaporator, sequentially flows from the (D+1)-th evaporator to the N-th evaporator, and flows from the N-th evaporator to a D-th evaporator, and is finally discharged from the D-th evaporator<br>③ Structure in which, when D=N, the process liquid flows sequentially from the first evaporator to the N-th evaporator, and is finally discharged from the N-th evaporator |
| condition 4 | Structure in which, in the evaporator except the N-th evaporator, that is, in the first evaporator, the process liquid is evaporated through steam, and in the second evaporator to an (N-1)-th evaporator, the process liquid is evaporated through vapor generated by evaporation of the process liquid of a previous evaporator, and thereafter, vapor moves to a next evaporator at the rear to be used to evaporate a process liquid of the next evaporator, and vapor evaporated in the N-th evaporator moves to a condenser. |
| condition 5 | Structure in which a preheater is installed in each evaporator to control a temperature of the injected process liquid and increase energy recovery. |

According to an exemplary embodiment, in the amino acid production system 100, a basic flow of the remaining process liquid pipe, except for the discharge pipe, may be fixed as a forward flow to maximize energy efficiency

improvement due to the preheaters 106, 107, 108, 109, and 110 to minimize the number of cases.

In the forward flow, energy obtained by the process liquid through the preheaters 106, 107, 108, 109, and 110 may be used to additionally evaporate the process liquid. At this time, energy efficiency may increase because a circulation structure in which energy is re-supplied to the process liquid is established as the additionally evaporated vapor is condensed. Meanwhile, in a backward flow, energy obtained by the process liquid through the preheaters 106, 107, 108, 109, and 110 is used to additionally evaporate the process liquid. However, when the additionally evaporated vapor is liquefied, it does not help to improve energy efficiency because a circulation structure in which energy is re-supplied to the process liquid is not established.

According to an exemplary embodiment, the amino acid production system 100 is a system including a forward five-effect falling film evaporator, and may be designed to satisfy the five conditions of Table 1 described above. At this time, the structure of various amino acid production systems 100 with different discharge pipes will be described.

First, an operation of the components constituting the amino acid production system 100 and the process liquid flow will be described based on the exemplary embodiment of FIG. 1.

Referring to FIG. 1, the first evaporator (#1 FF) 101, the second evaporator (#2 FF) 102, the third evaporator (#3 FF) 103, the fourth evaporator (#4 FF) 104 and the fifth evaporator (#5 FF) 105 are sequentially connected through a process liquid pipe.

In addition, connection is sequentially made from the fifth preheater (#5 PH) 110 through which the process liquid flows, the fourth preheater (#4 PH) 109, the third preheater (#3 PH) 108, the second preheater (#2 PH) 107, and the first preheater (#1 PH) 106 through the process liquid pipe. The first preheater (#1 PH) 106 is connected to the first evaporator 101 through the process liquid pipe.

Accordingly, in the amino acid production system 100, connection is made sequentially from the fifth preheater (#5 PH) 110 into which the process liquid is introduced, the fourth preheater (#4 PH) 109 → the third preheater (#3 PH) 108 → second preheater (#2 PH) 107 → the first preheater (#1 PH) 106 → the first evaporator 101 → second evaporator 102 → third evaporator 103 → fourth evaporator 104 → the fifth evaporator 105 through process liquid pipe.

At this time, the separators 111, 112, 113, 114, and 115 are connected to the evaporators 101, 102, 103, 104, and 105, respectively. Condensation heat, that is, vapor generated by evaporation of the process liquid discharged from each of the separators 111, 112, 113, 114, and 115 is supplied to preheaters 107, 108, 109, and 110 different from the other evaporators 102, 103, 104, and 105 at the rear.

The first evaporator 101 and the first preheater 106 receive steam from the outside. The first preheater 106 generates condensation heat as steam is liquefied through a heat exchange process, and the temperature of the process liquid increases due to the condensation heat. The process liquid having increased temperature is supplied to the first evaporator 101.

The first evaporator 101 condenses the steam supplied from the outside to evaporate the process liquid. In the first evaporator 101, steam condensate generated during the process of evaporating the process liquid is discharged to the outside.

The first separator (#1 separator) 111 connected to the first evaporator 101 separates the vapor (#1 vapor) evaporated from the process liquid in the first evaporator 101 from the evaporator 101 and supplies the vapor to the second evaporator (#2 FF) 102 and the second preheater (#2 PH) 107.

To the first circulation pump (#1 circulation pump) 116 connected to the first evaporator 101, the process liquid discharged from the first evaporator 101 and the process liquid from which vapor was separated in the first separator (#1 separator) 111 are mixed and introduced. A portion of the process liquid is circulated to the first evaporator 101, and a portion thereof is supplied to the second evaporator (#2 FF) 102.

The second preheater 107 heats the process liquid through condensation heat generated as the vapor (#1 vapor) supplied from the first separator 111 is liquefied. The heated process liquid is supplied to the first preheater 106.

The second evaporator 102 evaporates the process liquid supplied from the first circulation pump (#1 circulation pump) 116 through condensation of vapor (#1 vapor). Vapor condensate (#1 vapor condensate) generated during the evaporation process of the process liquid in the second evaporator 102 is discharged to the outside.

The second separator (#2 separator) 112 connected to the second evaporator 102 separates vapor (#2 vapor) generated during the evaporation process of the process liquid in the second evaporator 102 from the first evaporator 101 and supplies the separated vapor to the third evaporator (#3 FF) 103 and the third preheater (#3 PH) 108.

To the second circulation pump (#2 circulation pump) 117 connected to the second evaporator 102, the process liquid discharged from the second evaporator 102 and the process liquid from which vapor was separated by the second separator 112 are mixed introduced. A portion of the process liquid is circulated to the second evaporator 102, and a portion thereof is supplied to the third evaporator (#3 FF) 103.

The third evaporator 103 and the third preheater 108 are supplied with vapor (#2 vapor) from the second separator 112. In the third preheater 108, condensation heat is generated as the vapor (#2 vapor) is liquefied through a heat exchange process, and a temperature of the process liquid increases due to the condensation heat. The process liquid having increased temperature is supplied to the second preheater 107.

The third evaporator 103 condenses the vapor (#2 vapor) to evaporate the process liquid. In the third evaporator 103, vapor condensate generated during the process of evaporating the process liquid is discharged to the outside.

The third separator (#3 separator) 113 connected to the third evaporator 103 separates the vapor (#3 vapor) evaporated from the process liquid in the third evaporator 103 from the evaporator 103 and supplies the vapor to the fourth evaporator (#4 FF) 104 and the fourth preheater (#4 PH) 109.

To the third circulation pump (#3 circulation pump) 118 connected to the third evaporator 103, the process liquid discharged from the third evaporator 103 and the process liquid from which vapor was separated from the third separator (#3 separator) 113 are mixed and introduced. A portion of the process liquid is circulated to the third evaporator 103, and a portion thereof is supplied to the fourth evaporator (#4 FF) 104.

The fourth evaporator 104 and the fourth preheater 109 receive vapor (#3 vapor) from the third separator 113. In the fourth preheater 109, condensation heat is generated as the vapor (#3 vapor) is liquefied through a heat exchange process, and a temperature of the process liquid increases due to the condensation heat. The process liquid having an increased temperature is supplied to the third preheater 108.

The fourth evaporator 104 condenses vapor (#4 vapor) to evaporate the process liquid. In the fourth evaporator 104, vapor condensate generated during the process of evaporating the process liquid is discharged to the outside.

The fourth separator (#4 separator) 114 connected to the fourth evaporator 104 separates vapor (#4 vapor) evaporated from the process liquid in the fourth evaporator 104 from the evaporator 104 and supplies the vapor to the fifth evaporator (#5 FF) (105) and the fifth preheater (#5 PH) 110.

To the fourth circulation pump 119 connected to the fourth evaporator 104, the process liquid discharged from the fourth evaporator 104 and the process liquid from which vapor (#4 vapor) was separated in the fourth separator (#4 separator) 114 are mixed and introduced. A portion of the process liquid is circulated to the fourth evaporator 104, and a portion thereof is supplied to the fifth evaporator (#5 FF) 105.

The fifth evaporator 105 and the fifth preheater 110 are supplied with vapor (#5 vapor) from the fourth separator 114. In the fifth preheater 110, condensation heat is generated as the vapor (#4 vapor) is liquefied through a heat exchange process, and a temperature of the process liquid increases due to the condensation heat. The process liquid having an increased temperature is supplied to the fourth preheater 109.

The fifth evaporator 105 condenses the vapor (#4 Vapor) and evaporates the process liquid. In the fifth evaporator 105, vapor condensate generated during the process of evaporating the process liquid is discharged to the outside.

The fifth separator (#5 separator) 115 connected to the fifth evaporator 105 separates the vapor (#5 Vapor) evaporated from the process liquid in the fifth evaporator 105 from the evaporator 105 and supplies the vapor to the condenser 121.

A temperature of the cooling water supplied to the condenser 121 increases due to condensation heat generated as the vapor (#5 Vapor) is condensed. Cooling water and condensed water having an increased temperature are discharged to the outside.

To the fifth circulation pump (#5 circulation pump) 120 connected to the fifth evaporator 105, the process liquid discharged from the fifth evaporator 105 and the process liquid from which vapor (#5 vapor) was separated in the fifth separator (#5 separator) 115 are mixed and introduced. A portion of the process liquid is circulated through the fifth evaporator 105, and a portion thereof is discharged to the outside through the discharge pipe.

As such, the steam or vapor supplied to each of the evaporators 101, 102, 103, 104, and 105 and each of the preheaters 106, 107, 108, 109, and 110 is used as energy for heating and evaporating the process liquid.

The flow of the process liquid is described as follows.

The process liquid introduced from the outside is first supplied to the fifth preheater (#5 PH) 110 through the process liquid pipe. The process liquid heated through the fifth preheater (#5 PH) 110 is discharged to the fourth preheater (#4 PH) 109 through the process liquid pipe. The process liquid heated through the fourth preheater (#4 PH) 109 is discharged to the third preheater (#3 PH) 108 through the process liquid pipe. The process liquid heated through the third preheater (#3 PH) 108 is discharged to the second preheater (#2 PH) 107 through the process liquid pipe. The process liquid heated through the second preheater (#2 PH) 107 is discharged to the first preheater (#1 PH) 106 through the process liquid pipe.

The process liquid heated through the plurality of preheaters 106, 107, 108, 109, and 111 is supplied to the first evaporator 101 through a process liquid pipe connected to the first preheater (#1 PH) 106. The vapor (#1 vapor) generated by the evaporation of the process liquid by the first evaporator 101 is to the second evaporator 102 and the second preheater 107 through the first separator (#1 separator) 111.

The process liquid discharged by the first evaporator 101 and the first separator 111 is discharged to the first circulation pump (#1 circulation pump) 116. The first circulation pump 116 circulates a portion of the process liquid to the first evaporator 101 through the process liquid circulation pipe, and supplies a portion thereof to the second evaporator 102 through the process liquid pipe.

The vapor (#2 vapor) generated in the second evaporator 102 is supplied to the third evaporator 103 and the third

preheater 108 through the second separator 112.

The process liquid discharged by the second evaporator 102 and the second separator 112 is discharged to the second circulation pump (#2 circulation pump) 117. The second circulation pump 117 circulates a portion of the process liquid to the second evaporator 102 through the process liquid circulation pipe, and supplies a portion thereof to the third evaporator 103 through the process liquid pipe. The vapor (#3 vapor) generated in the third evaporator 103 is supplied to the fourth evaporator 104 and the fourth preheater 109 through the third separator 113.

The process liquid discharged by the third evaporator 103 and the third separator 113 is discharged to the third circulation pump (#3 circulation pump) 118. The third circulation pump (#3 circulation pump) 118 circulates a portion of the process liquid to the third evaporator 103 through the process liquid circulation pipe, and supplies a portion thereof to the fourth evaporator 104 through the process liquid pipe.

The vapor (#4 vapor) generated in the fourth evaporator 104 is supplied to the fifth evaporator 105 and the fifth preheater 110 through the fourth separator (#4 separator) 114.

The process liquid discharged by the fourth evaporator 104 and the fourth separator 114 is discharged to the fourth circulation pump (#4 circulation pump) 119. The fourth circulation pump 119 circulates a portion of the process liquid to the fourth evaporator 104 through the process liquid circulation pipe, and supplies a portion thereof to the fifth evaporator 105 through the process liquid pipe.

The vapor (#5 vapor) generated in the fifth evaporator 105 is supplied to the condenser 121 through the fifth separator (#5 separator) 115.

The process liquid discharged by the fifth evaporator 105 and the fifth separator 115 is discharged to the fifth circulation pump (#5 circulation pump) 120. The fifth circulation pump 120 circulates a portion of the process liquid to the fifth evaporator 105 through the process liquid circulation pipe.

In addition, the fifth circulation pump 120 discharges the amino acid concentrate produced through several evaporation processes to the outside through the discharge pipe.

As such, in the exemplary embodiment of FIG. 1, the evaporator is formed of a five- effect evaporator, and the discharge pipe is connected to the fifth evaporator 105.

The exemplary embodiment of FIG. 4 has the same structure as that of FIG. 1, except that the discharge pipe is connected to the fourth evaporator 104.

At this time, unlike the exemplary embodiment of FIG. 1, there is a backward flow of the process liquid. That is, the process liquid discharged from the fifth circulation pump 120 is connected to the fourth evaporator 104 through the process liquid pipe. The discharge pipe is connected to the fourth circulation pump 119, and the fourth circulation pump 119 discharges the amino acid concentrate produced through several evaporation processes to the outside through the discharge pipe.

The exemplary embodiment of FIG. 5 has the same structure as that of FIG. 1, except that the discharge pipe is connected to the third evaporator 103.

At this time, unlike the exemplary embodiment of FIG. 1, there is a backward flow of the process liquid. That is, the process liquid discharged from the fifth circulation pump 120 is connected to the third evaporator 103 through the process liquid pipe. The discharge pipe is connected to the third circulation pump 118, and the third circulation pump 118 discharges the amino acid concentrate produced through several evaporation processes to the outside through the discharge pipe.

The exemplary embodiment of FIG. 6 has the same structure as that of FIG. 1, except that the discharge pipe is connected to the second evaporator 102.

At this time, unlike the exemplary embodiment of FIG. 1, there is a backward flow of the process liquid. That is, the process liquid discharged from the fifth circulation pump 120 is connected to the second evaporator 102 through the process liquid pipe. The discharge pipe is connected to the second circulation pump 117, and the second circulation pump 117 discharges the amino acid concentrate produced through several evaporation processes to the outside through the discharge pipe.

The exemplary embodiment of FIG. 7 has the same structure as that of FIG. 1, except that the discharge pipe is connected to the first evaporator 101.

At this time, unlike the exemplary embodiment of FIG. 1, there is a backward flow of the process liquid. That is, the process liquid discharged from the fifth circulation pump 120 is connected to the first evaporator 101 through the process liquid pipe. The discharge pipe is connected to the first circulation pump 116, and the first circulation pump 116 discharges the amino acid concentrate produced through several evaporation processes to the outside through the discharge pipe.

As shown in FIG. 1, except for the case in which the amino acid concentrate is discharged from the final evaporator 105, one backward flow inevitably exists in the flow of the process liquid as shown in FIGS. 4, 5, 6, and 7.

The temperature of each of the evaporators 101, 102, 103, 104, and 105 in the multi-effect evaporator 101, 102, 103, 104, and 105 is lowered toward the rear end, that is, from the first evaporator 101 to the fifth evaporator 105 in terms of energy balance and heat transfer principle. Therefore, the backward flow that transports the process liquid from the evaporators 102, 103, 104, and 105 at the rear to the evaporators 101, 102, 103, and 104 at the front is necessarily accompanied by an increase in the temperature of the process liquid, which is loss in energy efficiency. As a result, in the

multi-effect evaporator configuration, energy efficiency may increase as the process liquid is discharged toward the rear end. Therefore, it is economically feasible to discharge the process liquid from the rear end as much as possible under the condition that the final concentration of the discharged process liquid is the same.

Nevertheless, in the actual amino acid production process, there are cases in which it is economically feasible to discharge the process liquid from the front end as much as possible. The most important purpose of operating an evaporator in the amino acid production process is to remove water from the process liquid. Therefore, in order to maximize the productivity of the entire amino acid production process, the concentration of the process liquid finally discharged from the evaporators 101, 102, 103, 104, and 105 needs to be increased as much as possible.

**In** addition, in general, multi-effect evaporator 101, 102, 103, 104, and 105 are the most energy-efficient water removal devices in the entire amino acid production process, whereas a rear evaporative crystallizer device (not shown) connected to the multi-effect evaporator 101, 102, 103, 104, and 105 has low energy efficiency compared to the multi-effect evaporator 101, 102, 103, 104, and 105. As a result, it may be more advantageous in terms of energy efficiency of the entire amino acid production process to increase the concentration of the process liquid finally discharged as high as possible, although the energy efficiency of the multi-effect evaporator is slightly reduced.

Due to the device structure of the multi-effect evaporator 101, 102, 103, 104, and 105, when the concentration of the process liquid to be operated exceeds solubility, a problem in which the heat exchanger is clogged due to precipitation of amino acid solids may occur. Therefore, an operating condition of the actual process should be such that the concentration of the process liquid is less than the solubility, and since the solubility of amino acids tends to increase at higher temperatures, discharge from the front end may be advantageous in terms of energy efficiency of the entire process.

As described above, in the actual operation of the multi-effect evaporator 101, 102, 103, 104, and 105, an optimal discharge pipe may vary depending on a type of amino acid and a flow rate of the injected process liquid. Therefore, in a production plant that needs to rapidly adjust the type and quantity of products produced according to market demand, there is a need to change the optimal discharge pipe from time to time according to situations.

As in the related art, the multi-effect evaporator 101, 102, 103, 104, and 105 having fixed discharge pipe may not cope with a case in which the optimal discharge pipe varies, so an opportunity to produce products with optimal energy efficiency may be lost.

Meanwhile, by implementing to reconfigure the process liquid pipe as in the exemplary embodiment of the present invention, even if the optimal discharge pipe changes according to the type and quantity of the product, the situation may be coped with promptly.

According to an exemplary embodiment, the amino acid production system 100 may produce various amino acid products, such as L-lysine, L-methionine, L-threonine, L-valine, L-tryptophan, L-histidine, L-arginine, L-isoleucine, L-cysteine, L-glutamine, and the like.

Hereinafter, the effect of the present invention was demonstrated through experiments, and various experimental examples are described as follows.

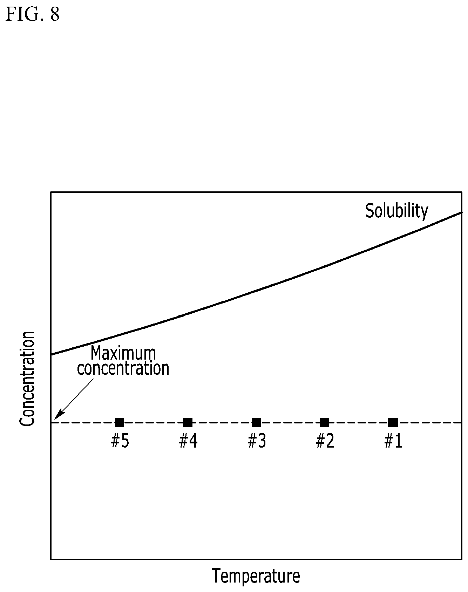

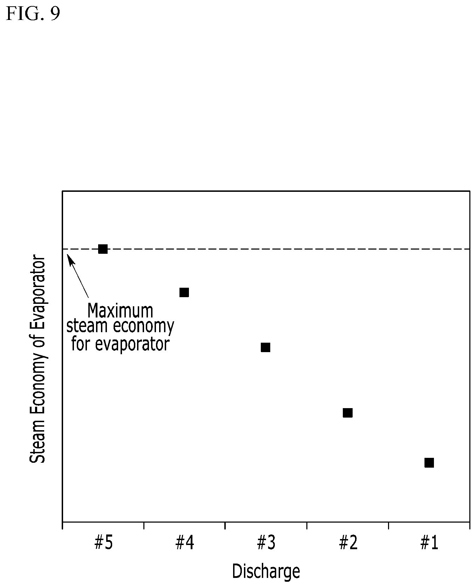

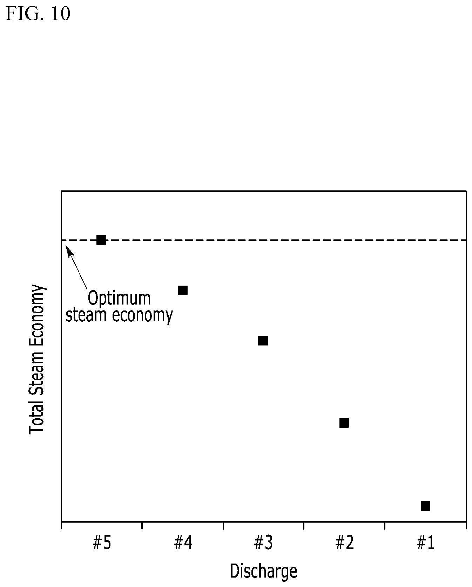

FIG. 8 is a graph showing concentration of a concentrate for each discharge pipe component according to experimental example and solubility, FIG. 9 is a graph showing individual steam efficiency of a multi-effect evaporator according to experimental example, and FIG. 10 is a graph showing steam efficiency of the entire process including an evaporative crystallization process at the rear according to experimental example.

In the experimental example of FIGS. 8, 9, and 10, an evaporation rate of the multi-effect evaporator 101, 102, 103, 104, and 105 is relatively small compared to the amount of the injected process liquid, so the process liquid is not concentrated to a maximum solubility concentration level in the configuration of all the multi-effect evaporator 101, 102, 103, 104, and 105.

At this time, FIG. 8 shows concentration versus solubility for each of the evaporators 101, 102, 103, 104, and 105 to which the discharge pipe is connected. Referring to FIG. 8, it can be seen that, since the concentration of the concentrate is lower than the solubility under all process conditions, the same level of maximum concentration may be secured in the configuration of all discharge pipes, that is, no matter whether the discharge pipe is connected to any one of the fifth evaporator 105, the fourth evaporator 104, the third evaporator 103, the second evaporator 102, and the first evaporator 101.

FIG. 9 shows steam economy (unit mass of water that may be evaporated as unit mass of steam) of each of the evaporators 101, 102, 103, 104, and 105 to which the discharge pipe is connected. FIG. 10 shows steam efficiency of the entire process, including up to the evaporative crystallization process at the rear, for each of the evaporators 101, 102, 103, 104, and 105 to which the discharge pipe is connected.

As can be seen in FIGS. 9 and 10, the steam efficiency of the individual evaporator 101, 102, 103, 104, and 105 has the most important effect on the steam efficiency of the entire process. Finally, it can be seen that a structure in which the discharge pipe is connected to the evaporator at the rearmost end, that is, the fifth evaporator 105, is most advantageous in overall steam efficiency.

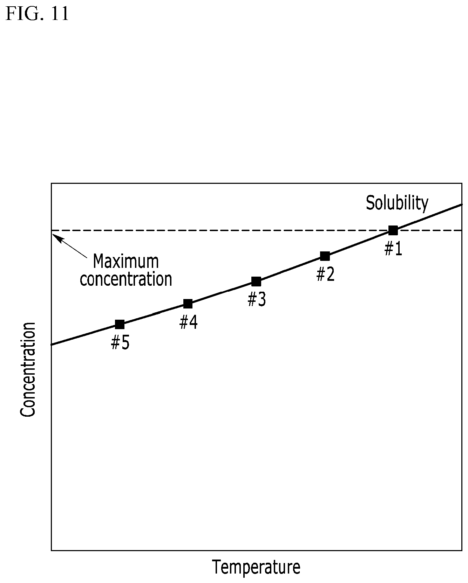

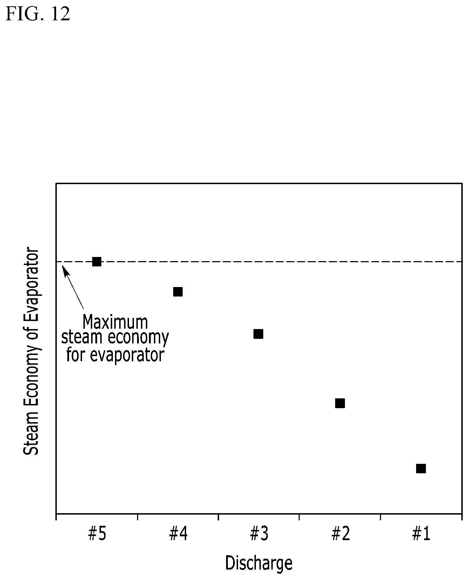

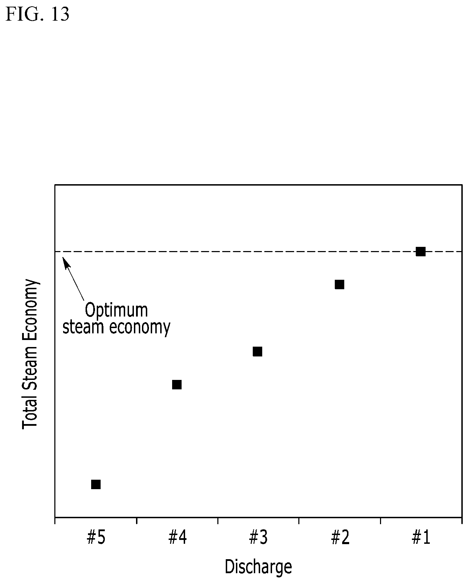

FIG. 11 is a graph showing the concentration of the concentrate for each discharge pipe configuration according

to another experimental example and solubility, FIG. 12 is a graph showing individual steam efficiency of the multi-effect evaporator according to another experimental example, and FIG. 13 is a graph showing steam efficiency of the entire process including an evaporative crystallization process at the rear according to another experimental example.

In the experimental examples of FIGS. 11, 12, and 13, the evaporation rate of the multi-effect evaporator 101, 102, 103, 104, and 105 is relatively high compared to the amount of the injected process liquid, so that the process liquid is concentrated to a high concentration to the level of solubility in the configuration of all the multi-effect evaporator 101, 102, 103, 104, and 105.

As shown in FIG. 11, a difference between the concentration and solubility of the process liquid is not large under all process conditions, but the maximum concentration is high in the configuration in which the discharge pipe is connected to the front end in which the temperature of the discharge pipe is the highest, that is, the first evaporator 101.

According to FIG. 12, the steam efficiency of the multi-effect evaporator 101, 102, 103, 104, and 105 is highest when the discharge pipe is connected to the evaporator at the rearmost end, that is, the fifth evaporator 105. However, in this case, since inefficient energy use of the evaporative crystallization process at the rear, which has relatively low steam efficiency, increases, a contribution rate of the evaporative crystallization at the rear is more dominant and the overall steam efficiency is lowered as the discharge pipe is connected to the evaporator 102, 103, 104, and 105 at the rear overall. Therefore, as shown in FIG. 13, it can be seen that the overall steam efficiency is highest when the discharge pipe is connected to the evaporators 101, 102, 103, and 104 at the front, especially, the first evaporator 101 located at the front.

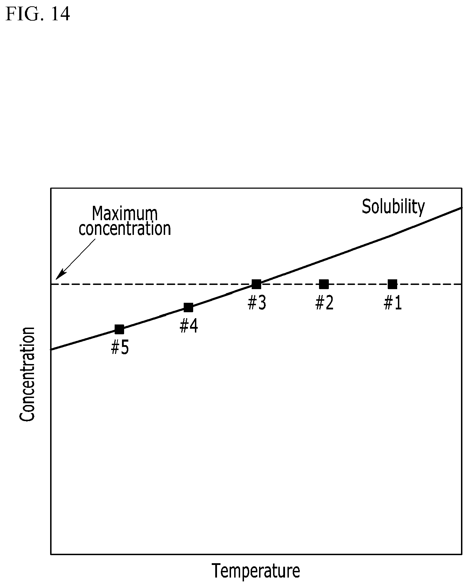

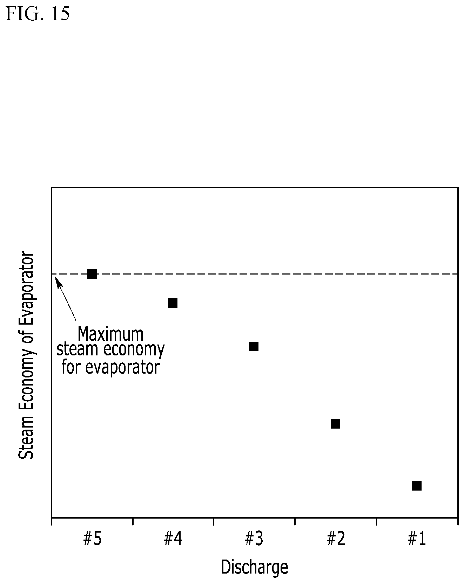

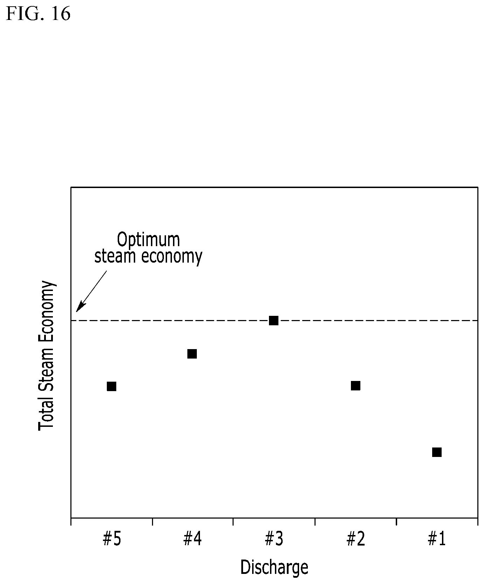

FIG. 14 is a graph showing concentration of a concentrate for each discharge pipe component according to another experimental example and solubility, FIG. 15 is a graph showing individual steam efficiency of a multi-effect evaporator according to another experimental example, and FIG. 16 is a graph showing steam efficiency of the entire process including an evaporative crystallization process at the rear according to another experimental example.

The experimental examples of FIGS. 14, 15, and 16 show a case in which the evaporation rate of the multi-effect evaporator 101, 102, 103, 104, and 105 is relatively intermediate, compared to the amount of injected process liquid, so that the process liquid is highly concentrated up to the solubility level only in the configuration of some multi-effect evaporator 101, 102, 103, 104, and 105.

Referring to FIG. 14, in the configuration in which the discharge pipe is connected to the third evaporator 103, the fourth evaporator 104, and the fifth evaporator 105, the concentration of the process liquid in the discharge pipe is concentrated to the solubility level. **In** addition, it can be seen that, in the configuration in which the discharge pipe is connected to the first evaporator 101 and the second evaporator 102, the concentration of the process liquid in the discharge pipe is lower than the solubility and is not highly concentrated. **In** particular, in the configuration in which discharge pipe is connected to the first evaporator 101, the second evaporator 102, and the third evaporator 103, the concentration is similar and the maximum concentration is obtained at this time.

Referring to FIG. 15, the individual steam efficiency is highest when the discharge pipe is connected to the last evaporator, that is, the fifth evaporator 105. However, considering the contribution rate of the evaporative crystallization process at the rear, which has relatively low steam efficiency, it can be seen that, in the configuration in which discharge pipes are connected to the first evaporator 101, the second evaporator 102, and the third evaporator 103, the steam efficiency is the highest in the configuration in which the discharge pipe is connected to the third evaporator 103, and is the best in the overall steam efficiency as shown in FIG. 16. However, since the relative evaporation contribution and steam efficiency of the two detailed processes change depending on the material and energy balance of the multi-effect evaporator 101, 102, 103, 104, and 105 and the evaporative crystallizer, the optimal position of the discharge pipe configuration may change, but the general tendency is maintained.

As described in FIGS. 8 to 16, five evaporators 101, 102, 103, 104, and 105 were used in the same manner as in FIGS. 1 to 7 in experimental examples for verifying the effect of the present invention. An industrial multi-effect falling film evaporator in which a heat exchange area of the falling film heat exchanger of each evaporator 101, 102, 103, 104, and 105 was 10 $m^2$, a heat exchange area of the preheaters 106, 107, 108, 109, and 110, of each evaporator 101, 102, 103, 104, and 105 was 1 $m^2$, a minimum flow rate of the injected process liquid was 2 ton/hr, and a maximum flow rate of the injected process liquid of 5 ton/hr was directly manufactured and prepared.

At this time, the evaporators 101, 102, 103, 104, and 105 were manufactured to reconfigure the discharge pipe as shown in FIGS. 1, 4, 5, 6, and 7.

A sufficient number of forced circulation concentrating crystallizers having a steam efficiency of 1.5 were placed at the rear of the multi-effect falling film evaporator 101, 102, 103, 104, and 105 and a crystallization process was conducted.

Four amino acids, including L-lysine, L-methionine, L-threonine, and L-valine, were prepared for the actual process test. For each amino acid, a commercial product with a purity of 98% or more was used.

At this time, the solubility of each amino acid product was measured through the steps of (a) to (g) as follows:

(a) filling a 2 L glass jacketed reactor connected to a constant temperature circulating water bath with a 1 L of distilled water,

(b) adjusting a temperature of the constant temperature circulating water bath to adjust an internal temperature of the glass jacketed reactor to a temperature to be measured,
(c) preparing an amino acid powder slurry by introducing amino acid powder to be measured into a glass jacketed reactor until it is no longer dissolved,
(d) stirring the prepared slurry for 24 hours, then stopping stirring and stabilizing the slurry for 2 hours,
(e) putting about 5g of sea sand into a ceramic container, placing it in a forced circulation oven at 105 °C for 3 hours to remove residual moisture, and then putting it in a vacuum dryer including silica gel for 1 hour to cool it to room temperature,
(f) collecting a transparent supernatant liquid from the glass jacketed reactor in step (d), putting it into the ceramic container in step (e), and quantifying the [mass of solution] by using a difference in weight before and after putting, and
(g) placing the container in step (f) in a forced circulation oven at 105 °C for 3 hours to remove residual moisture, placing it in a vacuum dryer including silica gel for 1 hour to cool it to room temperature, and quantifying the amount of water removed by using a weight difference, and converting the solubility of the amino acid to be measured using the same.

At this time, the solubility of amino acids is calculated as a mass fraction through Equation 1.

[Equation 1] Solubility of amino acid = (mass of solution - mass of removed moisture)/mass of solution [Equation 1]

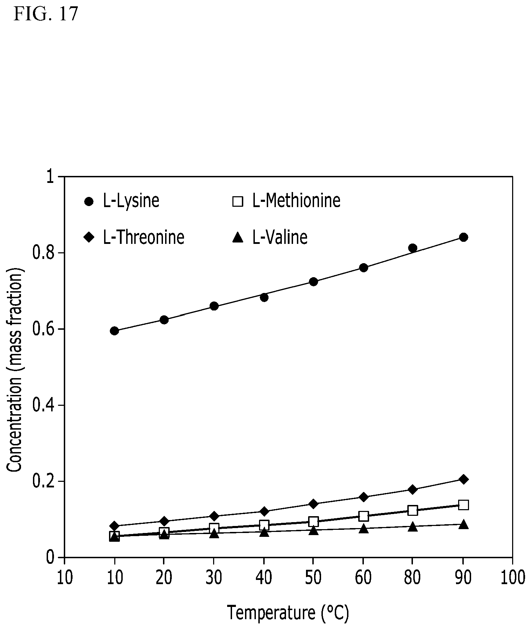

As such, the solubility of the four amino acids of L-lysine, L-methionine, L-threonine, and L-valine measured through the steps (a) to (g) is shown in FIG. 17.

FIG. 17 is a graph showing solubility of L-lysine, L-methionine, L-threonine, and L-valine in water according to experimental example. The solubility of each amino acid is used as a maximum concentration indicator reference corresponding to a temperature condition of each evaporator when a multi-effect falling film evaporator is operated, to prevent clogging of a falling film heat exchanger of the evaporators 101, 102, 103, 104, and 105.

By applying the experimental conditions described above, the experiment was conducted through one comparative example and four examples.

One comparative example corresponds to an L-lysine production process example in which the reconfigurable multi-effect falling film evaporator 101, 102, 103, 104, and 105 do not help improve overall process steam efficiency.

In one comparative example, an L-lysine aqueous solution having a mass fraction of 0.2 was prepared for a test, and a temperature of the aqueous solution was maintained at 50 °C during the experiment. The experiment was conducted by dividing a flow rate of the injected process liquid into 2, 3, 4, and 5 ton/hr, and the experiment was conducted by dividing cases in which the discharge pipe was connected to the first evaporator 101, the second evaporator 102, the third evaporator 103, the fourth evaporator 104, and the fifth evaporator 105.

Since hydrochloric acid in the same amount (equivalent) as lysine should be added to crystallize due to the nature of L-lysine, the same equivalent amount of hydrochloric acid was added continuously to the process liquid discharged from the multi-effect falling film evaporator 101, 102, 103, 104, and 105. Thereafter, the concentration of the crystal slurry discharged from the forced circulation evaporative crystallizer was fixed at 0.6 based on L-lysine mass fraction. After each experiment was stabilized for more than 10 hours, the concentration of the process liquid discharged from the multi-effect falling film evaporator and the steam efficiency of the entire process were observed, and the results are shown in Table 2.

Table 2 shows the flow rate of the process liquid injected in the L-lysine production process, the discharge concentration, and total steam efficiency of the multi-effect falling film evaporator according to the configuration in which the discharge pipe is differently connected for each evaporator.

(Table 2)

| Flow rate of injected process liquid (ton/hr) | Discharge pipe | Discharge concentration of evaporator (mass fraction) | Total steam efficiency |
|---|---|---|---|
| 2 | 1 | 0.423 | 2.82 |
| 2 | 2 | 0.423 | 2.91 |
| 2 | 3 | 0.423 | 3.03 |
| 2 | 4 | 0.423 | 3.11 |
| 2 | 5 | 0.423 | 3.19 (optimal) |
| 3 | 1 | 0.329 | 2.14 |
| 3 | 2 | 0.329 | 2.22 |

(continued)

| Flow rate of injected process liquid (ton/hr) | Discharge pipe | Discharge concentration of evaporator (mass fraction) | Total steam efficiency |
|---|---|---|---|
| 3 | 3 | 0.329 | 2.31 |
| 3 | 4 | 0.329 | 2.37 |
| 3 | 5 | 0.329 | 2.42 (optimal) |
| 4 | 1 | 0.291 | 1.87 |
| 4 | 2 | 0.291 | 1.95 |
| 4 | 3 | 0.291 | 2.02 |
| 4 | 4 | 0.291 | 2.07 |
| 4 | 5 | 0.291 | 2.12 (optimal) |
| 5 | 1 | 0.272 | 1.73 |
| 5 | 2 | 0.272 | 1.81 |
| 5 | 3 | 0.272 | 1.87 |
| 5 | 4 | 0.272 | 1.92 |
| 5 | 5 | 0.272 | 1.96 (optimal) |

According to Table 2, it can be seen that the discharge concentration is constant regardless of the evaporators 101, 102, 103, 104, and 105 to which the discharge pipe is connected at the same flow rate of the injected process liquid. This is because, the evaporation rate of the multi-effect evaporator 101, 102, 103, 104, and 105 is relatively small compared to the amount of injected process liquid, so that the process liquid is not highly concentrated to the equilibrium solubility level. Therefore, the total steam efficiency is always optimal regardless of the flow rate of the injected process liquid when the discharge pipe is connected to the fifth evaporator 105. When producing this type of amino acid product alone, there is no need to change the configuration of the evaporator to which the discharge pipe is connected, and even if the device is installed by fixing the configuration in which the discharge pipe is connected to the fifth evaporator 105, there is no loss in energy efficiency.

Next, various production processes in which the reconfigurable multi-effect falling film evaporator 101, 102, 103, 104, and 105 may help improve overall process steam efficiency are described as follows.

First, example 1 shows an L-methionine production process.

For a test, an L-methionine aqueous solution having a mass fraction of 0.05 was prepared, and a temperature of the aqueous solution was maintained at 50 °C during an experiment. The experiment was conducted by dividing the flow rate of the injected process liquid into 2, 3, 4, and 5 ton/hr. The experiment was conducted by dividing the discharge pipe to the first evaporator 101, the second evaporator 102, the third evaporator 103, the fourth evaporator 104, and the fifth evaporator 105. Thereafter, a concentration of a crystal slurry discharged from the forced circulation evaporative crystallizer was fixed at 0.25 based on L-methionine mass fraction. After stabilization for more than 10 hours in each experiment, the concentration of the process liquid discharged from the multi-effect falling film evaporator 101, 102, 103, 104, and 105 and the steam efficiency of the entire process were observed, and the results are shown in Table 3.

Table 3 shows the flow rate of the process liquid injected in the L-methionine production process, the discharge concentration, and total steam efficiency of multi-effect falling film evaporator according to the configuration of the evaporators 101, 102, 103, 104, and 105 differently connected to the discharge pipe.

(Table 3)

| Flow rate of injected process liquid (ton/hr) | Discharge pipe | Discharge concentration of evaporator (mass fraction) | Total steam efficiency |
|---|---|---|---|
| 2 | 1 | 0.120 | 2.68(optimal) |
| 2 | 2 | 0.115 | 2.67 |
| 2 | 3 | 0.111 | 2.65 |
| 2 | 4 | 0.105 | 2.62 |
| 2 | 5 | 0.100 | 2.55 |

(continued)

| Flow rate of injected process liquid (ton/hr) | Discharge pipe | Discharge concentration of evaporator (mass fraction) | Total steam efficiency |
|---|---|---|---|
| 3 | 1 | 0.095 | 2.19 |
| 3 | 2 | 0.095 | 2.27 |
| 3 | 3 | 0.095 | 2.35 |
| 3 | 4 | 0.095 | 2.40 (optimal) |
| 3 | 5 | 0.089 | 2.32 |
| 4 | 1 | 0.080 | 1.90 |
| 4 | 2 | 0.080 | 1.97 |
| 4 | 3 | 0.080 | 2.04 |
| 4 | 4 | 0.080 | 2.08 |
| 4 | 5 | 0.080 | 2.13 (optimal) |
| 5 | 1 | 0.073 | 1.75 |
| 5 | 2 | 0.073 | 1.83 |
| 5 | 3 | 0.073 | 1.89 |
| 5 | 4 | 0.073 | 1.92 |
| 5 | 5 | 0.073 | 1.97 (optimal) |

As can be seen in Table 3, when the flow rate of the injected process liquid is 2 ton/hr, the discharge concentration of the evaporators 101, 102, 103, 104, and 105 tends to increase at the front. This is because, the evaporation rate of the multi-effect evaporator 101, 102, 103, 104, and 105 is relatively high compared to the amount of injected process liquid, so that the process liquid is concentrated to a high concentration to the level of solubility. **In** this case, the optimal discharge pipe may be connected to the evaporators 101, 102, 103, and 104 other than the fifth evaporator 105. Therefore, when the flow rate of the injected process liquid was 2 ton/hr, the total steam efficiency was most optimal when the discharge pipe was connected to the first evaporator 101.

When the flow rate of the injected process liquid is 3 ton/hr, when the discharge pipe was connected to the first evaporator 101, the second evaporator 102, the third evaporator 103, and the fourth evaporator 104, an L-methionine based mass fraction was 0.095, showing the same degree of concentration. However, in the configuration in which the discharge pipe is connected to the fifth evaporator 105, concentration was possible up to a mass fraction of 0.89. Therefore, when the flow rate of the injected process liquid was 3 ton/hr, the total steam efficiency was most optimal when the discharge pipe was connected to the fourth evaporator 104.

When the flow rate of the injected process liquid was 4 ton/hr and 5 ton/hr, it can be seen that the discharge concentration was constant regardless of the evaporators 101, 102, 103, 104, and 105 to which the discharge pipe is connected. This is because, the evaporation rate of the multi-effect evaporator 101, 102, 103, 104, and 105 was relatively small compared to the amount of injected process liquid, so that the process liquid was not concentrated to a high concentration to the solubility level. Therefore, when the flow rates of the injected process liquid were 4 ton/hr and 5 ton/hr, the configuration in which the discharge pipe was connected to the fifth evaporator 105 was optimal in terms of total steam efficiency.

As a result, when producing L-methionine, the optimal configuration of the discharge pipe may be changed when adjusting the flow rate of the process liquid injected for production control, so energy efficiency may be improved through the installation of a reconfigurable multi-effect falling film evaporator.

A second example shows an L-threonine production process.

For a test, an L-threonine aqueous solution having a mass fraction of 0.10 was prepared, and a temperature of the aqueous solution was maintained at 50 °C during the experiment.

The experiment was conducted by dividing the flow rate of the injected process liquid into 2, 3, 4, and 5 ton/hr, and the experiment was conducted by dividing configurations in which the discharge pipe is connected to the first evaporator 101, the second evaporator 102, the third evaporator 103, the fourth evaporator 104, and the fifth evaporator 105. Thereafter, a concentration of a crystal slurry discharged from the forced circulation evaporative crystallizer was fixed at 0.60 based on L-threonine mass fraction. After stabilization for more than 10 hours in each experiment, the concentration of the process liquid discharged from the multi-effect falling film evaporator and the steam efficiency of the entire process

were observed, and the results are shown in Table 4.

Table 4 shows the flow rate of the process liquid injected in the L-threonine production process and the discharge concentration and total steam efficiency for each evaporator 101, 102, 103, 104, and 105 to which the discharge pipe is connected.

(Table 4)

| Flow rate of injected process liquid (ton/hr) | Discharge pipe | Discharge concentration of evaporator (mass fraction) | Total steam efficiency |
|---|---|---|---|
| 2 | 1 | 0.177 | 2.21 (optimal) |
| 2 | 2 | 0.169 | 2.18 |
| 2 | 3 | 0.166 | 2.17 |
| 2 | 4 | 0.163 | 2.17 |
| 2 | 5 | 0.162 | 2.16 |
| 3 | 1 | 0.166 | 1.96 |
| 3 | 2 | 0.166 | 1.99 |
| 3 | 3 | 0.166 | 2.06 (optimal) |
| 3 | 4 | 0.150 | 1.98 |
| 3 | 5 | 0.148 | 1.99 |
| 4 | 1 | 0.145 | 1.78 |
| 4 | 2 | 0.145 | 1.83 |
| 4 | 3 | 0.145 | 1.87 |
| 4 | 4 | 0.145 | 1.90 |
| 4 | 5 | 0.145 | 1.92 (optimal) |
| 5 | 1 | 0.140 | 1.70 |
| 5 | 2 | 0.140 | 1.78 |
| 5 | 3 | 0.140 | 1.82 |
| 5 | 4 | 0.140 | 1.85 |
| 5 | 5 | 0.140 | 1.88 (optimal) |

As can be seen in Table 4, when the flow rate of the injected process liquid is 2 ton/hr, the discharge concentration of the evaporators 101, 102, 103, 104, and 105 tends to increase at the front. This is because, the evaporation rate of the multi-effect evaporator 101, 102, 103, 104, and 105 is relatively high compared to the amount of injected process liquid, so that the process liquid is concentrated to a high concentration to the level of solubility.

When the flow rate of the injected process liquid was 2 ton/hr, the total steam efficiency was most optimal when the discharge pipe was connected to the first evaporator 101.

When the flow rate of the injected process liquid is 3 ton/hr, L-threonine based mass fraction was 0.166 in the configuration in which the discharge pipe is connected to the first evaporator 101, the second evaporator 102, and the third evaporator 103, showing the same degree of concentration. Meanwhile, in the configuration of the fourth evaporator 104 and the fifth evaporator 105, concentration was possible at an L-threonine based mass fraction of 0.166 or less. Therefore, when the flow rate of the injected process liquid was 3 ton/hr, the total steam efficiency was most optimal when the discharge pipe was connected to the third evaporator 103.

When the flow rate of the injected process liquid was 4 ton/hr and 5 ton/hr, it can be seen that the discharge concentration was constant regardless of the evaporators 101, 102, 103, 104, and 105 to which the discharge pipe is connected, and this is because, the evaporation rate of the multi-effect evaporator 101, 102, 103, 104, and 105 was relatively small compared to the amount of injected process liquid, so that the process liquid was not concentrated to a high concentration to the solubility level. Therefore, when the flow rates of the injected process liquid were 4 ton/hr and 5 ton/hr, the configuration in which the discharge pipe was connected to the evaporator 105 was optimal in terms of total steam efficiency. As a result, when producing L-threonine, the optimal configuration of the discharge pipe may be changed when adjusting the flow rate of the process liquid injected for production control, so energy efficiency may be improved through

the installation of a reconfigurable multi-effect falling film evaporator.

A third example shows an L-valine production process.

For the test, an aqueous solution of L-valine having a mass fraction of 0.05 was prepared, and the temperature of the aqueous solution was maintained at 50 degrees during the experiment.

The experiment was conducted by dividing the flow rate of the injected process liquid into 2, 3, 4, and 5 ton/hr, and the experiment was conducted by dividing configurations in which the discharge pipe is connected to the first evaporator 101, the second evaporator 102, the third evaporator 103, the fourth evaporator 104, and the fifth evaporator 105. Thereafter, a concentration of a crystal slurry discharged from the forced circulation evaporative crystallizer was fixed at 0.35 based on L-valine mass fraction. After stabilization for more than 10 hours in each experiment, the concentration of the process liquid discharged from the multi-effect falling film evaporator 101, 102, 103, 104, and 105 and the steam efficiency of the entire process were observed, and the results are shown in Table 4

Table 5 shows the flow rate of the process liquid injected in the L-valine production process and the discharge concentration and total steam efficiency according to the configuration in which the evaporators are connected to the discharge pipe.

(Table 5)

| Flow rate of injected process liquid (ton/hr) | Discharge pipe | Discharge concentration of evaporator (mass fraction) | Total steam efficiency |
|---|---|---|---|
| 2 | 1 | 0.088 | 2.08(optimal) |
| 2 | 2 | 0.084 | 2.07 |
| 2 | 3 | 0.080 | 2.05 |
| 2 | 4 | 0.079 | 2.04 |
| 2 | 5 | 0.077 | 2.01 |
| 3 | 1 | 0.080 | 1.91 |
| 3 | 2 | 0.080 | 1.95 |
| 3 | 3 | 0.080 | 2.00(optimal) |
| 3 | 4 | 0.075 | 1.96 |
| 3 | 5 | 0.074 | 1.95 |
| 4 | 1 | 0.075 | 1.80 |
| 4 | 2 | 0.075 | 1.85 |
| 4 | 3 | 0.075 | 1.90 |
| 4 | 4 | 0.075 | 1.91(optimal) |
| 4 | 5 | 0.071 | 1.89 |
| 5 | 1 | 0.071 | 1.72 |
| 5 | 2 | 0.071 | 1.76 |
| 5 | 3 | 0.071 | 1.82 |
| 5 | 4 | 0.071 | 1.86 |
| 5 | 5 | 0.071 | 1.88(optimal) |

As can be seen in Table 5, when the flow rate of the injected process liquid is 2 ton/hr, the discharge concentration of the evaporator 101, 102, 103, 104, and 105 tends to increase at the front. This is because, the evaporation rate of the multi-effect evaporator 101, 102, 103, 104, and 105 is relatively high compared to the amount of injected process liquid, so that the process liquid is concentrated to a high concentration to the level of solubility.

When the flow rate of the injected process liquid was 2 ton/hr, the total steam efficiency was most optimal when the discharge pipe was connected to the first evaporator 101.

When the flow rate of the injected process liquid is 3 ton/hr, the L-valine based mass fraction was 0.080 in the configuration in which the discharge pipe was connected to the first evaporator 101, the second evaporator 102, and the third evaporator 103, showing the same degree of concentration, and in the configuration in which the discharge pipe was connected to the fourth evaporator 104 and the fifth evaporator 105, concentration was possible at an L-valine based mass

fraction of 0.080 or less. This is because, the evaporation rate of the multi-effect evaporator 101, 102, 103, 104, and 105 is relatively large compared to the amount of injected process liquid only in the configuration in which the discharge pipe was connected to the fourth evaporator 104 and the fifth evaporator 105, so that the process liquid is concentrated to a high concentration to the level of solubility. Therefore, when the flow rate of the injected process liquid was 3 ton/hr, the total steam efficiency was most optimal when the third evaporator 103 was connected to the discharge pipe.

When the flow rate of the injected process liquid is 4 ton/hr, the L-valine based mass fraction was 0.075 in the configuration in which the discharge pipe was connected to the first evaporator 101, the second evaporator 102, the third evaporator 103, and the fourth evaporator 104, showing the same degree of concentration, and in the configuration in which the discharge pipe was connected to the fifth evaporator 105, concentration was possible at an L-valine based mass fraction of 0.075 or less.

When the flow rate of the injected process liquid was 4 ton/hr, the total steam efficiency was most optimal when the discharge pipe was connected to the fourth evaporator 104.

When the flow rate of the injected process liquid is 5 ton/hr, it can be seen that the discharge concentration was constant regardless of the evaporators 101, 102, 103, 104, and 105 to which the discharge pipe is connected. This is because, the evaporation rate of the multi-effect evaporator 101, 102, 103, 104, and 105 is relatively small compared to the amount of injected process liquid, so that the process liquid is not concentrated to a high concentration to the solubility level. Therefore, when the flow rate of the injected process liquid was 5 ton/hr, the configuration in which the discharge pipe was connected to the fifth evaporator 105 was optimal in terms of total steam efficiency.

As a result, when producing L-valine, the optimal discharge pipe configuration may be changed when adjusting the flow rate of the process liquid injected for production control, so energy efficiency may be improved through the installation of a reconfigurable multi-effect falling film evaporator.

According to the above description, when L-lysine, L-methionine, L-threonine, and L-valine were interchangeably produced in the same plant under the conditions of comparative example 1, example 1, example 2, and example 3, the optimal configuration of the discharge pipe may be variously changed depending on the flow rate of the injected process liquid and the type of amino acid to be produced. In the case of such amino acid compatible production, it can be seen that, even if the optimal discharge pipe for L-lysine is fixed to the fifth evaporator 105, since the configuration of the discharge pipe should be changed to produce other amino acids, it is helpful to improve the steam efficiency of the entire process when the reconfigurable multi-effect falling film evaporator is installed.

## Claims

**1.** A reconfigurable amino acid production system (100) comprising:

a plurality of preheaters (106, 107, 108, 109, 110) heating a process liquid in which amino acids are mixed and connected to each other through a plurality of pipes; and

a plurality of evaporators (101, 102, 103, 104, 105) including at least three evaporators, the plurality of evaporators (101, 102, 103, 104, 105) evaporating the process liquid heated through the plurality of preheaters (106, 107, 108, 109, 110) through heat exchange with a heat source and connected to each other through a plurality of pipes,

wherein one of the plurality of evaporators (101, 102, 103, 104, 105) discharges an amino acid concentrate from which water has been removed through evaporation to the outside through a discharge pipe, wherein the evaporators (101, 102, 103, 104, 105) are multi-effect falling film evaporators, and

the discharge pipe is selectively connected to one of the plurality of evaporators (101, 102, 103, 104, 105),

wherein the plurality of preheaters (106, 107, 108, 109, 110) are sequentially connected in series through the plurality of pipes,

wherein a plurality of separators (111, 112, 113, 114, 115) is provided and connected to the plurality of evaporators (101, 102, 103, 104, 105) and supplying a vapor discharged from the plurality of evaporators (101, 102, 103, 104, 105) to the evaporator and the preheater at the rear, and

wherein the first evaporator (101) and the first preheater (106), are supplied with steam introduced from the outside,

wherein a condenser (121) is provided and configured to condensing vapor discharged from the last evaporator (105),

wherein the plurality of evaporators (101, 102, 103, 104, 105) are sequentially connected in series through a plurality of pipes,

wherein a plurality of circulation pumps (116, 117, 118, 119, 120) are provided and respectively connected to the plurality of evaporators (101, 102, 103, 104, 105) and sequentially discharging the process liquid discharged from the plurality of evaporators (101, 102, 103, 104, 105) to the next evaporators through respective pipes,

wherein the plurality of circulation pumps (116, 117, 118, 119, 120) are further connected to a pipe circulating the process liquid to the connected evaporator,
wherein the amino acid production system (100) has a structure in which the discharge pipe is configured to be changeable to reconfigure the process liquid flow of the evaporators (101, 102, 103, 104, 105) according to any one of the following configurations:

- when the discharge pipe is connected to the first evaporator (101) to finally discharge the amino acid concentrate, a plurality of pipes connected to the plurality of evaporators (101, 102, 103, 104, 105) include a plurality of forward process liquid pipes transferring the process liquid in a forward direction from a second evaporator (102) to the last evaporator (105), and

a backward process liquid pipe transferring the process liquid in a backward direction from the last evaporator (105) to the first evaporator (101),
wherein a preheated process liquid discharged from the first preheater (106) flows into the second evaporator (102),
wherein the process liquid is introduced from the outside to a last preheater (110), wherein the process liquid heated through the last preheater (110) is discharged to a second preheater (107) and wherein, process liquid preheated through the second preheater (107) is discharged to the first preheater (106),
wherein vapor evaporated from the process liquid in the first evaporator (101) is supplied via the first separator (111) to the second preheater (107), wherein the vapor separated from the process liquid by the second evaporator (102) is supplied via the second separator (12) to the last preheater (110);

- when the discharge pipe is connected to the remaining evaporators (102, 103, 104) except for a first evaporator (101) and a last evaporator (105), among the plurality of evaporators (101, 102, 103, 104, 105), to finally discharge the amino acid concentrate,

the plurality of pipes connected to the plurality of evaporators (101, 102, 103, 104, 105) include a plurality of forward process liquid pipes transferring the process liquid in a forward direction from the first evaporator (101) to evaporators (102, 103, 104) located at the front of the last evaporator (105), and
a backward process liquid pipe transferring the process liquid in a backward direction from the last evaporator (105) to the evaporator connected to the discharge pipe,
wherein a preheated process liquid discharged from the first preheater (106) flows into the first evaporator (101),
wherein the process liquid is introduced from the outside to a last preheater (110), wherein the process liquid heated through the last preheater (110) is discharged to the second preheater (107) and wherein, process liquid preheated through the second preheater (107) is discharged to the first preheater (106),
wherein vapor evaporated from the process liquid in the first evaporator (101) is supplied via the first separator (111) to the second preheater (107), wherein the vapor separated from the process liquid by the second evaporator (102) is supplied via the second separator (12) to the last preheater (110); and

- when the discharge pipe is connected to the last evaporator (105) to finally discharge the amino acid concentrate,

the plurality of pipes connected to the plurality of evaporators (101, 102, 103, 104, 105) include a plurality of forward process liquid pipes transferring the process liquid from the first evaporator (101) to an evaporator (102, 103, 104) located at the front of the last evaporator (105),
wherein a preheated process liquid discharged from the first preheater (106) flows into the first evaporator (101),
wherein the process liquid is introduced from the outside to a last preheater (110), wherein the process liquid heated through the last preheater (110) is discharged to the second preheater (107) and wherein, process liquid preheated through the second preheater (107) is discharged to the first preheater (106),
wherein vapor evaporated from the process liquid in the first evaporator (101) is supplied via the first separator (111) to the second preheater (107), wherein the vapor separated from the process liquid by the second evaporator (102) is supplied via the second separator (12) to the last preheater (110).

**2.** A method of connecting a plurality of pipes in a reconfigurable amino acid production system (100) according to claim 1, the method comprising:

sequentially connecting the evaporators (101, 102, 103, 104, 105) in series through the plurality of process liquid pipes, and

selectively connecting a discharge pipe discharging an amino acid concentrate from which water is removed through evaporation in the evaporators to one of the evaporators (101, 102, 103, 104, 105), wherein

- when the discharge pipe is connected to the first evaporator (101) to finally discharge the amino acid concentrate, the step of sequentially connecting the evaporators (101, 102, 103, 104, 105) comprises connecting through process liquid pipes moving a process liquid in a forward direction from a second evaporator (102) to the last evaporator (105),

connecting through process liquid pipes moving the process liquid in a backward direction from the last evaporator (105) to the first evaporator (101), and
connecting the first preheater (106) with the second evaporator (102) so that the preheated process liquid discharged from the first preheater (106) flows to the second evaporator (102),

- when the discharge pipe is connected to the remaining evaporators (102, 103, 104) except for a first evaporator (101) and a last evaporator (105), among the plurality of evaporators (101, 102, 103, 104, 105), to finally discharge the amino acid concentrate, the step of sequentially connecting the evaporators (101, 102, 103, 104, 105) comprises connecting through process liquid pipes moving a process liquid in a forward direction from the first evaporator (101) to evaporators (102, 103, 104) located at the front of the last evaporator (105),

connecting through process liquid pipes moving the process liquid in a backward direction from the last evaporator (105) to the evaporator connected to the discharge pipe, and
connecting the first preheater (106) with the first evaporator (101) so that the preheated process liquid discharged from the first preheater (106) flows to the first evaporator (101); and

- when the discharge pipe is connected to the last evaporator (105) to finally discharge the amino acid concentrate, the step of sequentially connecting the evaporators (101, 102, 103, 104, 105) comprises connecting through process liquid pipes moving a process liquid in a forward direction from the first evaporator (101) to an evaporator (102, 103, 104) located at the front of the last evaporator (105), and connecting the first preheater (106) with the first evaporator (101) so that the preheated process liquid discharged from the first preheater (106) flows to the first evaporator (101).

## Patentansprüche

**1.** Rekonfigurierbares Aminosäureproduktionssystem (100), umfassend:

eine Vielzahl von Vorerhitzern (106, 107, 108, 109, 110), die eine Prozessflüssigkeit mit darin beigemischten Aminosäuren erhitzen und durch eine Vielzahl von Rohrleitungen miteinander verbunden sind; und
eine Vielzahl von Verdampfern (101, 102, 103, 104, 105), die mindestens drei Verdampfer umfasst, wobei die Vielzahl von Verdampfern (101, 102, 103, 104, 105) die durch die Vielzahl von Vorerhitzern (106, 107, 108, 109, 110) erhitzte Prozessflüssigkeit durch Wärmeaustausch mit einer Wärmequelle verdampfen und durch eine Vielzahl von Rohrleitungen miteinander verbunden sind,
wobei einer der Vielzahl von Verdampfern (101, 102, 103, 104, 105) ein Aminosäurekonzentrat, aus dem Wasser durch Verdampfen entfernt wurde, durch ein Auslassrohr nach außen abführt, wobei die Verdampfer (101, 102, 103, 104, 105) Mehrfacheffekt-Fallstromverdampfer sind, und
das Auslassrohr selektiv mit einem der Vielzahl von Verdampfern (101, 102, 103, 104, 105) verbunden ist,
wobei die Vielzahl von Vorerhitzern (106, 107, 108, 109, 110) durch die Vielzahl von Rohrleitungen sequenziell in Reihe geschaltet sind,
wobei eine Vielzahl von Abscheidern (111, 112, 113, 114, 115) vorgesehen und mit der Vielzahl von Verdampfern (101, 102, 103, 104, 105) verbunden sind und einen Dampf, der von der Vielzahl von Verdampfern (101, 102, 103, 104, 105) abgelassen wird, dem Verdampfer und dem Vorerhitzer auf der Rückseite zuführen, und
wobei der erste Verdampfer (101) und der erste Vorerhitzer (106) mit von außen eingeleitetem Dampf versorgt werden,
wobei ein Verflüssiger (121) vorgesehen und dazu eingerichtet ist, vom dem letzten Verdampfer (105) abgelassenen Dampf zu verflüssigen,
wobei die Vielzahl von Verdampfern (101, 102, 103, 104, 105) durch eine Vielzahl von Rohrleitungen sequenziell in Reihe geschaltet sind,

wobei eine Vielzahl von Umlaufpumpen (116, 117, 118, 119, 120) vorgesehen und jeweils mit der Vielzahl von Verdampfern (101, 102, 103, 104, 105) verbunden sind und die von der Vielzahl von Verdampfern (101, 102, 103, 104, 105) abgelassene Prozessflüssigkeit sequenziell durch entsprechende Rohrleitungen an die nächsten Verdampfer abführen,
wobei die Vielzahl von Umlaufpumpen (116, 117, 118, 119, 120) ferner mit einer Rohrleitung verbunden sind, die die Prozessflüssigkeit zum angeschlossenen Verdampfer zirkulieren lässt,
wobei das Aminosäureproduktionssystem (100) einen Aufbau aufweist, bei dem das Auslassrohr derart ausgestaltet ist, dass es zum Rekonfigurieren des Prozessflüssigkeitsstroms der Verdampfer (101, 102, 103, 104, 105) gemäß einer der folgenden Konfigurationen veränderlich ist:

- wenn das Auslassrohr mit dem ersten Verdampfer (101) verbunden ist, um das Aminosäurekonzentrat endgültig abzulassen, umfassen eine Vielzahl von Rohrleitungen, die mit der Vielzahl von Verdampfern (101, 102, 103, 104, 105) verbunden sind, eine Vielzahl von Vorwärts-Prozessflüssigkeitsleitungen, die die Prozessflüssigkeit in einer Vorwärtsrichtung von einem zweiten Verdampfer (102) zum letzten Verdampfer (105) weiterleiten, und

eine Rückwärts-Prozessflüssigkeitsleitung, die die Prozessflüssigkeit in einer Rückwärtsrichtung vom letzten Verdampfer (105) zum ersten Verdampfer (101) weiterleitet,
wobei eine vorerhitzte Prozessflüssigkeit, die vom ersten Vorerhitzer (106) abgelassen wird, in den zweiten Verdampfer (102) strömt,
wobei die Prozessflüssigkeit von außen in einen letzten Vorerhitzer (110) eingeleitet wird, wobei die durch den letzten Vorerhitzer (110) erhitzte Prozessflüssigkeit an einen zweiten Vorerhitzer (107) abgeführt wird und wobei durch den zweiten Vorerhitzer (107) vorerhitzte Prozessflüssigkeit an den ersten Vorerhitzer (106) abgeführt wird,
wobei im ersten Verdampfer (101) aus der Prozessflüssigkeit verdampfter Dampf über den ersten Abscheider (111) dem zweiten Vorerhitzer (107) zugeführt wird, wobei der durch den zweiten Verdampfer (102) aus der Prozessflüssigkeit abgeschiedene Dampf über den zweiten Abscheider (12) dem letzten Vorerhitzer (110) zugeführt wird;

- wenn das Auslassrohr mit den übrigen Verdampfern (102, 103, 104) mit Ausnahme eines ersten Verdampfers (101) und eines letzten Verdampfers (105) von der Vielzahl von Verdampfern (101, 102, 103, 104, 105) verbunden ist, um das Aminosäurekonzentrat endgültig abzulassen,

umfassen die Vielzahl von Rohrleitungen, die mit der Vielzahl von Verdampfern (101, 102, 103, 104, 105) verbunden sind, eine Vielzahl von Vorwärts-Prozessflüssigkeitsleitungen, die die Prozessflüssigkeit in einer Vorwärtsrichtung vom ersten Verdampfer (101) zu Verdampfern (102, 103, 104), die sich auf der Vorderseite des letzten Verdampfers (105) befinden, weiterleiten, und
eine Rückwärts-Prozessflüssigkeitsleitung, die die Prozessflüssigkeit in einer Rückwärtsrichtung vom letzten Verdampfer (105) zu dem mit dem Auslassrohr verbundenen Verdampfer weiterleitet,
wobei eine vorerhitzte Prozessflüssigkeit, die vom ersten Vorerhitzer (106) abgelassen wird, in den ersten Verdampfer (101) strömt,
wobei die Prozessflüssigkeit von außen in einen letzten Vorerhitzer (110) eingeleitet wird, wobei die durch den letzten Vorerhitzer (110) erhitzte Prozessflüssigkeit an den zweiten Vorerhitzer (107) abgeführt wird und wobei durch den zweiten Vorerhitzer (107) vorerhitzte Prozessflüssigkeit an den ersten Vorerhitzer (106) abgeführt wird,
wobei im ersten Verdampfer (101) aus der Prozessflüssigkeit verdampfter Dampf über den ersten Abscheider (111) dem zweiten Vorerhitzer (107) zugeführt wird, wobei der durch den zweiten Verdampfer (102) aus der Prozessflüssigkeit abgeschiedene Dampf über den zweiten Abscheider (12) dem letzten Vorerhitzer (110) zugeführt wird; und

- wenn das Auslassrohr mit dem letzten Verdampfer (105) verbunden ist, um das Aminosäurekonzentrat endgültig abzulassen,

umfassen die Vielzahl von Rohrleitungen, die mit der Vielzahl von Verdampfern (101, 102, 103, 104, 105) verbunden sind, eine Vielzahl von Vorwärts-Prozessflüssigkeitsleitungen, die die Prozessflüssigkeit vom ersten Verdampfer (101) zu einem Verdampfer (102, 103, 104), der sich auf der Vorderseite des letzten Verdampfers (105) befindet, weiterleiten,
wobei eine vorerhitzte Prozessflüssigkeit, die vom ersten Vorerhitzer (106) abgelassen wird, in den ersten

Verdampfer (101) strömt,
wobei die Prozessflüssigkeit von außen in einen letzten Vorerhitzer (110) eingeleitet wird, wobei die durch den letzten Vorerhitzer (110) erhitzte Prozessflüssigkeit an den zweiten Vorerhitzer (107) abgeführt wird und wobei durch den zweiten Vorerhitzer (107) vorerhitzte Prozessflüssigkeit an den ersten Vorerhitzer (106) abgeführt wird,
wobei im ersten Verdampfer (101) aus der Prozessflüssigkeit verdampfter Dampf über den ersten Abscheider (111) dem zweiten Vorerhitzer (107) zugeführt wird, wobei der durch den zweiten Verdampfer (102) aus der Prozessflüssigkeit abgeschiedene Dampf über den zweiten Abscheider (12) dem letzten Vorerhitzer (110) zugeführt wird.

**2.** Verfahren zum Verbinden einer Vielzahl von Rohrleitungen in einem rekonfigurierbaren Aminosäureproduktionssystem (100) nach Anspruch 1, wobei das Verfahren umfasst:

sequenzielles Verbinden der Verdampfer (101, 102, 103, 104, 105) in Reihe durch die Vielzahl von Prozessflüssigkeitsleitungen, und
selektives Verbinden eines Auslassrohrs, das ein Aminosäurekonzentrat, aus dem durch Verdampfen in den Verdampfern Wasser entfernt wird, an einen der Verdampfer (101, 102, 103, 104, 105) abführt, wobei

- wenn das Auslassrohr mit dem ersten Verdampfer (101) verbunden ist, um das Aminosäurekonzentrat endgültig abzulassen, der Schritt des sequenziellen Verbindens der Verdampfer (101, 102, 103, 104, 105) umfasst: das Verbinden durch Prozessflüssigkeitsleitungen, die eine Prozessflüssigkeit in einer Vorwärtsrichtung von einem zweiten Verdampfer (102) zum letzten Verdampfer (105) transportieren,

das Verbinden durch Prozessflüssigkeitsleitungen, die die Prozessflüssigkeit in einer Rückwärtsrichtung vom letzten Verdampfer (105) zum ersten Verdampfer (101) transportieren, und
das Verbinden des ersten Vorerhitzers (106) mit dem zweiten Verdampfer (102), sodass die vorerhitzte Prozessflüssigkeit, die vom ersten Vorerhitzer (106) abgelassen wird, zum zweiten Verdampfer (102) strömt;

- wenn das Auslassrohr mit den übrigen Verdampfern (102, 103, 104) mit Ausnahme eines ersten Verdampfers (101) und eines letzten Verdampfers (105) von der Vielzahl von Verdampfern (101, 102, 103, 104, 105) verbunden ist, um das Aminosäurekonzentrat endgültig abzulassen, der Schritt des sequenziellen Verbindens der Verdampfer (101, 102, 103, 104, 105) umfasst:

das Verbinden durch Prozessflüssigkeitsleitungen, die eine Prozessflüssigkeit in einer Vorwärtsrichtung vom ersten Verdampfer (101) zu Verdampfern (102, 103, 104) transportieren, die sich auf der Vorderseite des letzten Verdampfers (105) befinden,
das Verbinden durch Prozessflüssigkeitsleitungen, die die Prozessflüssigkeit in einer Rückwärtsrichtung vom letzten Verdampfer (105) zu dem mit dem Auslassrohr verbundenen Verdampfer transportieren, und
das Verbinden des ersten Vorerhitzers (106) mit dem ersten Verdampfer (101), sodass die vorerhitzte Prozessflüssigkeit, die vom ersten Vorerhitzer (106) abgelassen wird, zum ersten Verdampfer (101) strömt; und

- wenn das Auslassrohr mit dem letzten Verdampfer (105) verbunden ist, um das Aminosäurekonzentrat endgültig abzulassen, der Schritt des sequenziellen Verbindens der Verdampfer (101, 102, 103, 104, 105) das Verbinden durch Prozessflüssigkeitsleitungen, die eine Prozessflüssigkeit in einer Vorwärtsrichtung vom ersten Verdampfer (101) zu einem Verdampfer (102, 103, 104), der sich auf der Vorderseite des letzten Verdampfers (105) befindet, transportieren, und das Verbinden des ersten Vorerhitzers (106) mit dem ersten Verdampfer (101) umfasst, sodass die vorerhitzte Prozessflüssigkeit, die vom ersten Vorerhitzer (106) abgelassen wird, zum ersten Verdampfer (101) strömt.

## Revendications

**1.** Système de production (100) reconfigurable d’acides aminés comprenant :

une pluralité de dispositifs de préchauffage (106, 107, 108, 109, 110) chauffant un liquide de traitement dans lequel des acides aminés sont mélangés et étant reliés les uns aux autres par une pluralité de tuyaux ; et
une pluralité d’évaporateurs (101, 102, 103, 104, 105) comportant au moins trois évaporateurs, la pluralité d’évaporateurs (101, 102, 103, 104, 105) évaporant le liquide de traitement chauffé par la pluralité de dispositifs

de préchauffage (106, 107, 108, 109, 110) par échange de chaleur avec une source de chaleur et étant reliés les uns aux autres par une pluralité de tuyaux,
un évaporateur parmi la pluralité d'évaporateurs (101, 102, 103, 104, 105) évacuant un concentré d'acides aminés dont l'eau a été éliminée par évaporation vers l'extérieur à travers un tuyau d'évacuation, les évaporateurs (101, 102, 103, 104, 105) étant des évaporateurs à film tombant à effets multiples et
le tuyau d'évacuation étant sélectivement relié à un évaporateur parmi la pluralité d'évaporateurs (101, 102, 103, 104, 105),
la pluralité de dispositifs de préchauffage (106, 107, 108, 109, 110) étant séquentiellement reliés en série par la pluralité de tuyaux,
une pluralité de séparateurs (111, 112, 113, 114, 115) étant prévus et reliés à la pluralité d'évaporateurs (101, 102, 103, 104, 105) et fournissant une vapeur évacuée depuis la pluralité d'évaporateurs (101, 102, 103, 104, 105) à l'évaporateur et au dispositif de préchauffage à l'arrière et
le premier évaporateur (101) et le premier dispositif de préchauffage (106) étant alimentés en vapeur introduite depuis l'extérieur,
un condenseur (121) étant prévu et conçu pour condenser la vapeur évacuée depuis le dernier évaporateur (105),
la pluralité d'évaporateurs (101, 102, 103, 104, 105) étant séquentiellement reliés en série par une pluralité de tuyaux,
une pluralité de pompes de circulation (116, 117, 118, 119, 120) étant prévues et respectivement reliées à la pluralité d'évaporateurs (101, 102, 103, 104, 105) et évacuant séquentiellement le liquide de traitement évacué depuis la pluralité d'évaporateurs (101, 102, 103, 104, 105) vers les évaporateurs suivants à travers des tuyaux respectifs,
la pluralité de pompes de circulation (116, 117, 118, 119, 120) étant en outre reliées à un tuyau faisant circuler le liquide de traitement vers l'évaporateur relié,
le système de production (100) d'acides aminés présentant une structure dans laquelle le tuyau d'évacuation est conçu pour être modifiable afin de reconfigurer l'écoulement de liquide de traitement des évaporateurs (101, 102, 103, 104, 105) selon l'une quelconque des configurations suivantes :

- lorsque le tuyau d'évacuation est relié au premier évaporateur (101) afin d'évacuer finalement le concentré d'acides aminés, une pluralité de tuyaux reliés à la pluralité d'évaporateurs (101, 102, 103, 104, 105) comportent une pluralité de tuyaux à liquide de traitement vers l'avant transférant le liquide de traitement dans un sens vers l'avant depuis un deuxième évaporateur (102) vers le dernier évaporateur (105) et

un tuyau à liquide de traitement vers l'arrière transférant le liquide de traitement dans un sens vers l'arrière depuis le dernier évaporateur (105) vers le premier évaporateur (101),
un liquide de traitement préchauffé évacué depuis le premier dispositif de préchauffage (106) s'écoulant dans le deuxième évaporateur (102),
le liquide de traitement étant introduit depuis l'extérieur vers un dernier dispositif de préchauffage (110), le liquide de traitement chauffé par le dernier dispositif de préchauffage (110) étant évacué vers un deuxième dispositif de préchauffage (107) et le liquide de traitement préchauffé par le deuxième dispositif de préchauffage (107) étant évacué vers le premier dispositif de préchauffage (106),
la vapeur évaporée depuis le liquide de traitement dans le premier évaporateur (101) étant fournie par l'intermédiaire du premier séparateur (111) au deuxième dispositif de préchauffage (107), la vapeur séparée depuis le liquide de traitement par le deuxième évaporateur (102) étant fournie par l'intermédiaire du deuxième séparateur (12) au dernier dispositif de préchauffage (110) ;

- lorsque le tuyau d'évacuation est relié aux évaporateurs (102, 103, 104) restants à l'exception d'un premier évaporateur (101) et d'un dernier évaporateur (105), parmi la pluralité d'évaporateurs (101, 102, 103, 104, 105), pour finalement évacuer le concentré d'acides aminés,

la pluralité de tuyaux reliés à la pluralité d'évaporateurs (101, 102, 103, 104, 105) comportent une pluralité de tuyaux à liquide de traitement vers l'avant transférant le liquide de traitement dans un sens vers l'avant depuis le premier évaporateur (101) vers des évaporateurs (102, 103, 104) situés devant le dernier évaporateur (105) et un tuyau à liquide de traitement vers l'arrière transférant le liquide de traitement dans un sens vers l'arrière depuis le dernier évaporateur (105) vers l'évaporateur relié au tuyau d'évacuation,
un liquide de traitement préchauffé évacué depuis le premier dispositif de préchauffage (106) s'écoulant dans le premier évaporateur (101),
le liquide de traitement étant introduit depuis l'extérieur vers un dernier dispositif de préchauffage (110), le liquide

de traitement chauffé par le dernier dispositif de préchauffage (110) étant évacué vers le deuxième dispositif de préchauffage (107) et le liquide de traitement préchauffé par le deuxième dispositif de préchauffage (107) étant évacué vers le premier dispositif de préchauffage (106),
la vapeur évaporée depuis le liquide de traitement dans le premier évaporateur (101) étant fournie par l'intermédiaire du premier séparateur (111) au deuxième dispositif de préchauffage (107), la vapeur séparée depuis le liquide de traitement par le deuxième évaporateur (102) étant fournie par l'intermédiaire du deuxième séparateur (12) au dernier dispositif de préchauffage (110) ; et

- lorsque le tuyau d'évacuation est relié au dernier évaporateur (105) pour finalement évacuer le concentré d'acides aminés,

la pluralité de tuyaux reliés à la pluralité d'évaporateurs (101, 102, 103, 104, 105) comportent une pluralité de tuyaux à liquide de traitement vers l'avant transférant le liquide de traitement depuis le premier évaporateur (101) vers un évaporateur (102, 103, 104) situé devant le dernier évaporateur (105),
un liquide de traitement préchauffé évacué depuis le premier dispositif de préchauffage (106) s'écoulant dans le premier évaporateur (101),
le liquide de traitement étant introduit depuis l'extérieur vers un dernier dispositif de préchauffage (110), le liquide de traitement chauffé par le dernier dispositif de préchauffage (110) étant évacué vers le deuxième dispositif de préchauffage (107) et le liquide de traitement préchauffé par le deuxième dispositif de préchauffage (107) étant évacué vers le premier dispositif de préchauffage (106),
la vapeur évaporée depuis le liquide de traitement dans le premier évaporateur (101) étant fournie par l'intermédiaire du premier séparateur (111) au deuxième dispositif de préchauffage (107), la vapeur séparée depuis le liquide de traitement par le deuxième évaporateur (102) étant fournie par l'intermédiaire du deuxième séparateur (12) au dernier dispositif de préchauffage (110).

**2.** Procédé de liaison d'une pluralité de tuyaux dans un système de production (100) reconfigurable d'acides aminés selon la revendication 1, le procédé comprenant :

la liaison séquentielle des évaporateurs (101, 102, 103, 104, 105) en série par la pluralité de tuyaux à liquide de traitement et
la liaison sélective d'un tuyau d'évacuation évacuant un concentré d'acides aminés dont l'eau a été éliminée par évaporation dans les évaporateurs vers l'un des évaporateurs (101, 102, 103, 104, 105), dans lequel

- lorsque le tuyau d'évacuation est relié au premier évaporateur (101) pour finalement évacuer le concentré d'acides aminés, l'étape de liaison séquentielle des évaporateurs (101, 102, 103, 104, 105) comprend la liaison par des tuyaux à liquide de traitement déplaçant un liquide de traitement dans un sens vers l'avant depuis un deuxième évaporateur (102) vers le dernier évaporateur (105),

la liaison par des tuyaux à liquide de traitement déplaçant le liquide de traitement dans un sens vers l'arrière depuis le dernier évaporateur (105) vers le premier évaporateur (101) et
la liaison du premier dispositif de préchauffage (106) au deuxième évaporateur (102) de telle sorte que le liquide de traitement préchauffé évacué depuis le premier dispositif de préchauffage (106) s'écoule vers le deuxième évaporateur (102) ;

- lorsque le tuyau d'évacuation est relié aux évaporateurs (102, 103, 104) restants à l'exception d'un premier évaporateur (101) et d'un dernier évaporateur (105), parmi la pluralité d'évaporateurs (101, 102, 103, 104, 105), pour finalement évacuer le concentré d'acides aminés, l'étape de liaison séquentielle des évaporateurs (101, 102, 103, 104, 105) comprend

la liaison par des tuyaux à liquide de traitement déplaçant un liquide de traitement dans un sens vers l'avant depuis le premier évaporateur (101) vers des évaporateurs (102, 103, 104) situés devant le dernier évaporateur (105),
la liaison par des tuyaux à liquide de traitement déplaçant le liquide de traitement dans un sens vers l'arrière depuis le dernier évaporateur (105) vers l'évaporateur relié au tuyau d'évacuation et
la liaison du premier dispositif de préchauffage (106) au premier évaporateur (101) de telle sorte que le liquide de traitement préchauffé évacué depuis le premier dispositif de préchauffage (106) s'écoule vers le premier évaporateur (101) ; et

- lorsque le tuyau d'évacuation est relié au dernier évaporateur (105) pour finalement évacuer le concentré d'acides aminés, l'étape de liaison séquentielle des évaporateurs (101, 102, 103, 104, 105) comprend la liaison par des tuyaux à liquide de traitement déplaçant un liquide de traitement dans un sens vers l'avant depuis le premier évaporateur (101) vers un évaporateur (102, 103, 104) situé devant le dernier évaporateur (105) et la liaison du premier dispositif de préchauffage (106) au premier évaporateur (101) de telle sorte que le liquide de traitement préchauffé évacué depuis le premier dispositif de préchauffage (106) s'écoule vers le premier évaporateur (101).

FIG. 1

100
Steam
#1 PH
#2 PH
#3 PH
#4 PH
#5 PH
#1 FF
#2 FF
#3 FF
#4 FF
#5 FF
#1 Separator
#2 Separator
#3 Separator
#4 Separator
#5 Separator
#1 Vapor
#2 Vapor
#3 Vapor
#4 Vapor
#5 Vapor
#1 Circlation Pump
#2 Circlation Pump
#3 Circlation Pump
#4 Circlation Pump
#5 Circlation Pump
Sleam Condensate
#1 Vapor Condensate
#2 Vapor Condensate
#3 Vapor Condensate
#4 Vapor Condensate
#5 Vapor Condensate
Feed
Discharge
Condenser
Cooling water (out)
Cooling water (in)
101
102
103
104
105
106
107
108
109
110
111
112
113
114
115
116
117
118
119
120
121
: process liquid pipe
: process liquid circulation pipe
: vapor pipe
: discharge pipe

FIG. 2

101
process liquid (in)
101b
Steam or Vapor
101a
101c
Vapor (out)
111a
Steam Condensate
or Vapor Condensate
101d
111
101e
111b
process liquid (out)

FIG. 3

process liquid (out)
106
106e
Steam or Vapor
106c
106a
Steam Condensate
or Vapor Condensate
106d
106b
process liquid (in)

FIG. 4
100
Feed
Steam
Cooling water (out)
Cooling water (in)
Condenser
121
#5 Vapor Condensate
Discharge
101
102
103
104
105
106
107
108
109
110
#1 PH
#2 PH
#3 PH
#4 PH
#5 PH
#1 FF
#2 FF
#3 FF
#4 FF
#5 FF
#1 Vapor
#2 Vapor
#3 Vapor
#4 Vapor
#5 Vapor
#1 Separator
#2 Separator
#3 Separator
#4 Separator
#5 Separator
111
112
113
114
115
116
117
118
119
120
#1 Circlation Pump
#2 Circlation Pump
#3 Circlation Pump
#4 Circlation Pump
#5 Circlation Pump
Sleam Condensate
#1 Vapor Condensate
#2 Vapor Condensate
#3 Vapor Condensate
#4 Vapor Condensate
: vapor pipe
: process liquid pipe
: discharge pipe
: process liquid pipe (circulation)

FIG. 5

100
Feed
Steam
Cooling water (out)
Cooling water (in)
Condenser
121
#5 Vapor Condensate
Discharge
101
102
103
104
105
106
107
108
109
110
111
112
113
114
115
116
117
118
119
120
#1 PH
#2 PH
#3 PH
#4 PH
#5 PH
#1 FF
#2 FF
#3 FF
#4 FF
#5 FF
#1 Separator
#2 Separator
#3 Separator
#4 Separator
#5 Separator
#1 Vapor
#2 Vapor
#3 Vapor
#4 Vapor
#5 Vapor
#1 Circlation Pump
#2 Circlation Pump
#3 Circlation Pump
#4 Circlation Pump
#5 Circlation Pump
Sleam Condensate
#1 Vapor Condensate
#2 Vapor Condensate
#3 Vapor Condensate
#4 Vapor Condensate
: vapor pipe
: process liquid pipe
: discharge pipe
: process liquid pipe (circulation)

100
Feed
Steam
106
#1 PH
101
107
#2 PH
108
#3 PH
109
#4 PH
110
#5 PH
102
103
104
105
#1 FF
#2 FF
#3 FF
#4 FF
#5 FF
#1 Vapor
#2 Vapor
#3 Vapor
#4 Vapor
#5 Vapor
111
#1 Separator
112
#2 Separator
113
#3 Separator
114
#4 Separator
115
#5 Separator
116
#1 Circlation Pump
117
#2 Circlation Pump
118
#3 Circlation Pump
119
#4 Circlation Pump
120
#5 Circlation Pump
Sleam Condensate
#1 Vapor Condensate
#2 Vapor Condensate
#3 Vapor Condensate
#4 Vapor Condensate
#5 Vapor Condensate
121
Condenser
Cooling water (out)
Cooling water (in)
: process liquid pipe
: process liquid pipe (circulation)
: vapor pipe
: discharge pipe
Discharge

FIG. 6

FIG. 7
100
Feed
Steam
Cooling water (out)
Cooling water (in)
Condenser
121
#5 Vapor Condensate
: process liquid pipe
: process liquid pipe (circulation)
: vapor pipe
: discharge pipe
Discharge
105
110
104
109
103
108
102
107
106
101
#1 PH
#2 PH
#3 PH
#4 PH
#5 PH
#1 FF
#2 FF
#3 FF
#4 FF
#5 FF
#1 Vapor
#2 Vapor
#3 Vapor
#4 Vapor
#5 Vapor
#1 Separator
#2 Separator
#3 Separator
#4 Separator
#5 Separator
111
112
113
114
115
116
117
118
119
120
#1 Circlation Pump
#2 Circlation Pump
#3 Circlation Pump
#4 Circlation Pump
#5 Circlation Pump
#1 Vapor Condensate
#2 Vapor Condensate
#3 Vapor Condensate
#4 Vapor Condensate
Sleam Condensate

FIG. 8

Solubility
Maximum concentration
Concentration
#5
#4
#3
#2
#1
Temperature

FIG. 9

Steam Economy of Evaporator
Maximum
steam economy
for evaporator
#5
#4
#3
#2
#1
Discharge

FIG. 10

Total Steam Economy
Optimum
steam economy
#5
#4
#3
#2
#1
Discharge

FIG. 11

Solubility
Maximum concentration
#1
#2
#3
#4
#5
Concentration
Temperature

FIG. 12

Steam Economy of Evaporator
Maximum
steam economy
for evaporator
#5
#4
#3
#2
#1
Discharge

FIG. 13

Total Steam Economy
Optimum
steam economy
#5
#4
#3
#2
#1
Discharge

FIG. 14

Maximum concentration
Solubility
#3
#2
#1
#4
#5
Concentration
Temperature

FIG. 15

Steam Economy of Evaporator
Maximum
steam economy
for evaporator
#5
#4
#3
#2
#1
Discharge

FIG. 16

Optimum
steam economy
Total Steam Economy
#5
#4
#3
#2
#1
Discharge

FIG. 17

L-Lysine
L-Methionine
L-Threonine
L-Valine
Concentration (mass fraction)
1
0.8
0.6
0.4
0.2
0
10
10
20
30
40
50
60
80
90
100
Temperature (°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 11185839 B2
- US 8594848 B
- DE 2334481 A1
- CN 101804262 B
- US 2006157338 A1
- US 5250183 A
- CN 107050902 A
- CN 202270371 U


### Non-patent literature cited in the description


- **A. ADAMO et al.** On-Demand Continuous-Flow Production of Pharmaceuticals in a Compact, Reconfigurable System. *Science*, 2016, vol. 352, 6281
- **A.-C. BEDARD et al.** Reconfigurable system for automated optimization of diverse chemical reactions. *Science*, 2018, vol. 361, 6408
- **L. HOHMANN et al.** Continuous Downstream Processing of Amino Acids in a Modular Miniplant. *Chem. Eng. Technol.*, 2018, vol. 41, 1152